# EUROPÄISCHE PATENTSCHRIFT

(11) **EP 1 884 179 B1**
(45) Veröffentlichungstag und Bekanntmachung des Hinweises auf die Patenterteilung: **04.05.2016**
(21) Anmeldenummer: 06015511.6
(22) Anmeldetag: 25.07.2006
(51) Int. Cl.: A47J 27/08

(54) **Dampfkochtopf**
Pressure cooker
Autocuiseur

(43) Veröffentlichungstag der Anmeldung: 06.02.2008
(73) Patentinhaber: WMF Group GmbH, 73312 Geislingen/Steige (DE)
(72) Erfinder: Kindler, Michael, 64293 Darmstadt (DE); Metz, Guido, 64293 Darmstadt (DE); Mormone, Maria, 73329 Kuchen (DE); Neumayer, Martin, 89547 Gerstetten-Dettingen (DE); Reinhard, Dieter, 73326 Deggingen (DE); Zimmermann, Werner, 73333 Gingen (DE)
(74) Vertreter: Grünecker Patent- und Rechtsanwälte PartG mbB

(56) Entgegenhaltungen:
- EP-A- 0 343 325
- EP-A- 0 504 830
- EP-A- 0 651 962
- EP-A- 1 634 519
- DE-A1- 2 353 384
- DE-A1- 2 511 845
- DE-U1- 29 719 066
- FR-A- 2 634 914
- GB-A- 2 056 312
- GB-A- 2 182 583
- US-A1- 2003 229 969

## Beschreibung

Die Erfindung bezieht sich auf einen Dampfkochtopf der im Oberbegriff von Anspruch 1 erläuterten Art.

Ein derartiger Dampfkochtopf ist aus der GB-A-2 056 312 bekannt. Der bekannte Dampfkochtopf enthält einen Griff und ein Bedienelement, das in Form eines Drehknopfes ausgebildet ist. Mit dem Drehknopf ist ein Stift fest verbunden, der als Antriebswelle für einen Zeitgeber ausgebildet ist. Zur Bedienung des Drehknopfes muss sich die Bedienperson jedoch immer über den Topf beugen, so dass die Handhabung nicht besonders bequem ist.

Die DE-A-25 11 845 zeigt einen Dampfdruckkochtopf mit Bajonettverschluss und einem Bedienelement, das als Schieber ausgebildet und in einer Ausnehmung im Deckelhandgriff untergebracht ist. Es ist weiterhin ein Schwenksegment vorgesehen, das um eine im Wesentlichen horizontale Achse drehbar ist, und durch die sich in fluchtender Ausrichtung befindlichen Handgriffe ein Deckel und Topf verstellt wird, um eine weitere Verschiebung des Schiebers in seine endgültige Position zu gestatten.

Die GB-A-2 182 583 beschreibt einen Dampfdruckkochtopf mit Schnellabdampffunktion, wobei das Abdampfen einerseits durch das Kochventil und andererseits durch eine Öffnung im Deckelrand geschieht, die normalerweise durch den dort liegenden Dichtring verschlossen wird, wobei im Falle des Abdampfens der Dichtring abgehoben wird.

Die DE-A-23 53 384 beschreibt ein Ventil für Druckkochtöpfe mit Schnellabdampffunktion, wobei das Ventil einen Betätigungssteg enthält, der um eine im Wesentlichen senkrechte Achse gedreht werden muss.

Die EP-A-1 634 519 beschreibt einen Dampfdruckkochtopf mit einer zweistufigen Druckabbaustufe, wobei die Abdampfparameter einstellbar sind.

Die FR-A-2 634 914 beschreibt einen Dampfdruckkochtopf mit Druckerfassung auf elektronischem Wege, wobei die Druckerfassung durch optische Elemente erfolgt.

Die US-A-2003/0229969 beschreibt einen Dampfdruckkochtopf mit einer Schieberbetätigung, die als Deckelgriffelement ausgebildet ist.

Aufgabe der vorliegenden Erfindung ist es, einen bekannten Dampfkochtopf zu verbessern.

Diese Aufgabe wird gelöst mit einem Dampfkochtopf nach Anspruch 1.

Bevorzugte Ausführungsformen sind in den jeweiligen Unteransprüchen offenbart.

Bei einem Dampfkochtopf sind in der Regel verschiedene mechanische Bauteile vorgesehen, mit denen der Garraum geöffnet und geschlossen werden kann. Die mechanischen Elemente dienen hierbei dazu, beispielsweise Öffnungen im Deckel des Topfes zu öffnen und zu schließen, um so einen Druckaufbau durch Erhitzen des Topfes zu ermöglichen und/oder ein Druckablassen durchzuführen.

Hierbei werden beispielsweise Schieber eingesetzt, um verschiedene Elemente wie Druckventile zu betätigen.

Hierbei hat es sich als nachteilig herausgestellt, dass Schieber oft aus verschiedenen Komponenten zusammengesetzt werden müssen, so dass sich das Spiel bzw. die Toleranzen der verschiedenen Bauteile addieren. Im übrigen ist die Anzahl von Funktionen, die mit einem Schieber eingestellt werden können begrenzt. Bei dem Dampfkochtopf ist ein Bedienelement vorgesehen, das eine Drehwelle umfasst. Mit einer Drehwelle können zusätzliche Funktionen betätigt werden und weiterhin ist mit einer Drehwelle eine sehr hohe Präzision verbunden, so dass Produktionstoleranzen oder ein Spiel keine oder nur eine untergeordnete Bedeutung haben.

Das Bedienelement mit der Drehwelle ist mit einem Griff gekoppelt. Dieser Griff steht seitlich von dem Dampfkochtopf ab. Dadurch wird erreicht, dass die Bedienung der Drehwelle außerhalb von dem Bereich oberhalb von dem Dampfkochtopf stattfinden kann, da in diesem Bereich durch aufgeheizte Luft ein Gefahrenbereich entstehen kann.

Um das Bedienelement mechanisch zu schützen, ist es vorteilhafterweise zumindest teilweise in dem Griff aufgenommen.

Um den obengenannten Gefahrenbereich zu umgehen, ist es vorteilhaft, wenn die Drehwelle sich aus einem Bereich von seitlich des Garraums bis in einem Bereich oberhalb des Garraums erstreckt. Seitlich des Garraums ist auch ein Bereich der höher angeordnet ist als der Deckel bzw. das obere Ende des Garraums, jedoch von oben betrachtet seitlich von dem Garraum oder dem Deckel liegt.

Die Drehwelle ist bevorzugterweise mit einem Betätigungselement versehen und dieses Betätigungselement ist vorzugsweise am Griffende angeordnet. Durch die Anordnung am Griffende befindet sich das Betätigungselement im maximal möglichen Abstand von dem Dampfkochtopf, der heiß sein kann und gewährleistet so eine hohe Sicherheit bei der Handhabung des Dampfkochtopfs.

Das Betätigungselement ist hierzu vorzugsweise vollständig seitlich von dem Garraum angeordnet.

Die Drehwelle hat vorzugsweise mindestens zwei, drei, vier oder noch mehr vordefinierte Drehstellungen. Diese liegen innerhalb von einer vollen Umdrehung und noch bevorzugter innerhalb von lediglich einer Halben-, einer Drittel- oder einer Viertelumdrehung der Drehwelle. Durch die verschiedenen Drehstellungen können verschiedene Einstellungen des Dampfkochtopfs bewirkt werden, wie etwa verschiedene Kochstufen oder eine Öffnung des Garraums zur Druckentlastung oder Ähnliches. Die Drehstellungen können beispielsweise durch Anschläge und/oder Rastpositionen vordefiniert sein. Bei Drehung der Drehwelle können als vordefinierte Drehstellungen beispielsweise solche Positionen vorgesehen sein, aus denen heraus eine Drehung der Drehwelle ein größeres Drehmoment benötigt als eine Drehung aus anderen Positionen heraus und/oder wobei sich die Drehwelle von alleine aus einer zu der vordefinierten Drehstellungen benachbarten Position in die vordefinierten Drehstellungen. Beim Drehen der Drehwelle über eine vordefinierte Drehstellung kann ein deutliches Einrasten gespürt werden.

Die verschiedenen vordefinierten Drehstellungen können eine Nullposition, bei der ein Druckaufbau nicht möglich ist, sowie eine oder mehrere verschiedene Kochstufen umfassen. Auch sind eine oder mehrere Drehstellungen zum Druckablassen möglich. Die Drehstellung für zwei oder mehr Kochstufen können auf verschiedenen Seiten der Nullposition oder auf der selben Seite der Nullposition angeordnet sein. Im letzten Fall können die beiden Kochstufen durch Drehung aus der Nullposition heraus in dieselbe Richtung erreicht werden wohingegen sonst eine Drehung aus der Nullposition in verschiedene Richtungen erfolgen muss.

Die Drehung der Drehwelle ist ohne Anschlag möglich, d. h. die Drehwelle kann um mehrere Umdrehungen in dieselbe Richtung gedreht werden. Andererseits ist es auch möglich die Drehung mit Anschlägen zu begrenzen. Dabei sind dann nur noch Drehungen um z. B. eine halbe, eine Drittel- oder eine Viertelumdrehung möglich. Voreingestellte Dreheinstellungen mit dazugehörigen Funktionen wie der Nullstellung, Kochstufen oder Druckablasspositionen sind vorteilhafterweise bei den Anschlagspositionen vorgesehen.

Das Drehen der Drehwelle ist vorteilhafterweise so möglich, dass die Drehwelle dabei nicht auch linear verlagert wird, wie dies bei einer Schraube, die gedreht wird, der Fall wäre.

An dem Dampfkochtopf sind vorzugsweise eins, zwei, drei oder mehr Nocken vorgesehen. Zusammen mit einem Nockenfolger ist es so möglich, die verschiedenen mechanischen Elemente des Dampfkochtopfs zu verstellen.

Für die bei einem Dampfkochtopf vorkommenden mechanischen Elemente sind Nocken besonders vorteilhaft, da entsprechende Nockenfolger in der Regel gegen den Nocken vorgespannt werden müssen, was mit Federkräften geschehen kann, die jedoch beispielsweise bei Druckmessern oder Ähnlichem in der Regel bereits vorhanden sind. Von daher lassen sich Nocken besonders wirkungsvoll zur Ausnutzung der Drehbewegung der Drehwelle in Dampfkochtöpfen einsetzen.

Vorteilhaft ist es beispielsweise weiterhin Wippelemente vorzusehen, die mit den jeweiligen Nocken zusammenwirken, da mit derartigen Wippelementen relativ flache Konstruktionen möglich sind, da dann ein Nocken nicht unmittelbar auf denjenigen Teil drücken muss, der verstellt werden soll, sondern dies mechanisch über eine Wippe in eine Gegenbewegung umgesetzt wird.

Durch die Drehung der Drehwelle ist es beispielsweise möglich, den maximalen Solldruck des Dampfkochtopfs einzustellen. Oberhalb von dem maximalen Solldruck oder oberhalb von einem vorbestimmten vielfachen Wert (beispielsweise dem 1,5-fachen des Solldrucks) beginnt der Dampfkochtopf abzublasen. Dadurch wird ein weiterer Druckanstieg verhindert.

Weiterhin kann durch die Drehung der Drehwelle beispielsweise auch der Auslösedruck für eine Zeiterfassung eingestellt werden. Hierbei wird eine Zeiterfassung durch einen bestimmten Auslösedruck ausgelöst, was bedeutet, dass die Zeiterfassung dann beginnt oder endet. Durch Drehung der Drehwelle kann dieser Auslösedruck gewählt werden, so dass durch Drehung der Drehwelle beispielsweise verschiedene Kochstufen eingestellt werden können.

Durch Drehung der Drehwelle ist es weiterhin möglich den Dampfkochtopf zum Druckablassen zu öffnen oder zu schließen. Durch verschiedene Drehstellungen können verschieden große Druckablassraten erreicht werden.

Neben der Drehung der Drehwelle ist es weiterhin vorteilhafterweise möglich, die Drehwelle auch linear zu verschieben. Hierdurch lassen sich weitere Funktionen mit ein und demselben Bedienelement betätigen.

Beispielsweise ist es möglich, den Dampfkochtopf auch oder anstelle der Drehbewegung durch ein lineares Verschieben zu öffnen oder zu schließen, um Druck abzulassen. Die Öffnung, die durch ein lineares Verschieben freigegeben wird und die Öffnung, die durch eine Drehung der Drehwelle freigegeben werden, können verschieden groß sein, so dass durch die eine oder die andere Handlung verschiedene Ausströmquerschnitte freigegeben werden, um so eine schnelle oder langsame Druckentlastung des Dampfkochtopfs zu ermöglichen.

Ein verschieden schnelles Druckablassen ist aber auch durch eine Drehung in verschiedene Drehpositionen oder durch ein Verschieben in verschiedene lineare Stellpositionen möglich.

Durch Drehung und/oder Verschiebung der Drehwelle kann die Vorspannung eines mit einem elastischen Element, wie etwa einer Feder, vorgespannten Druckventils variiert werden. Druckventile weisen in der Regel elastische Elemente auf, die sich bei Druckerhöhung verformen. Dadurch lässt sich ein Druckventil oder eine Druckerfassung realisieren. Diese Vorspannung kann durch Drehung der Drehwelle variiert werden, um so die Reaktion des jeweiligen Druckventils oder Druckerfassers auf Druckänderungen zu variieren.

In einer besonders vorteilhaften Ausführungsform umfasst der Druckmesser eine elektronische Auswerteeinrichtung. Mit dieser können verschiedene Parameter erfasst werden, wie beispielsweise der Druck oder das Erreichen eines oder mehrerer Druckstufen bzw. das Über- oder Unterschreiten von einer oder mehrerer Druckstufen oder Ähnliches.

Der Druckmesser hat vorteilhafterweise ein durch den Druck verlagerbares Messelement, wobei die elektronische Auswerteeinrichtung zur Druckbestimmung die Position des verlagerbaren Messelements erfasst. In dieser Variante ist es möglich, durch mechanische Verstellung der Vorspannung des verlagerbaren Messelements den Solldruck, ab der die elektronische Auswerteeinrichtung die Erreichung eines Solldrucks detektiert, zu variieren.

Falls ein derartiges verlängerbares Messelement sich einmal verklemmen sollte, ist es vorteilhaft, wenn es von außen in eine Ruhestellung gebracht werden kann. Die Ruhestellung ist diejenige, die das Messelement normalerweise einnimmt, wenn kein Druck in dem Dampfkochtopf vorliegt.

Die Drehwelle kann vorteilhafterweise geradlinig ausgebildet sein. Sie kann dann aus oder in einem Stück gefertigt werden, was hier vorteilhaft ist. Sie kann jedoch auch eine oder mehrere biegsame oder flexible Stellen aufweisen, so dass die Drehbewegung auch um einen Knick oder eine Kurve herum übertragen werden kann. Dies erlaubt größere Freiheiten bei der Gestaltung des Griffs und der Anordnung der zu verstellenden Elemente.

Die Drehwelle kann sowohl nur aus einem Material gefertigt sein, als auch aus zwei, drei oder mehr Materialien. Sie kann z. B. eine oder mehrere umspritzte Metallstangen umfassen (Metall und Kunststoff). Die Metallstange(n) kann/können einen eckigen Querschnitt aufweisen, um eine Verdrehsicherheit des umspritzten Kunststoffs zu gewährleisten. Weiter kann die Welle an verschleißanfälligen Stellen (Lagerung, Nockenfolger o. ä.) mit einem Verschleißschutz, wie etwa einer Metallkappe, versehen sein.

Ein Dampfkochtopf weist bekanntermaßen ein Bedienelement zum Öffnen und Schließen des Dampfkochtopfs auf. Diese Öffnung dient dazu, bei dem noch mit dem Deckel verschlossenen Dampfkochtopf eine Öffnung des Garraums zum Außenraum zu öffnen oder zu schließen, um so kontrolliert den Druck ablassen zu können.

Der Dampfkochtopf weist Mittel auf, mit denen der Druck mit mindestens zwei vorgegebenen, verschiedenen Druckablassraten abgelassen werden kann.

Auch kann ein Dampfkochtopf vorgesehen sein, der Mittel aufweist, mit denen der Druck mit einer vorgegebenen Druckablassrate abgelassen werden kann und weiterhin mit einer zweiten Druckablassrate, die jedoch vom Bediener vorgegeben werden kann und die bis zu größeren Werten als der vorgegebenen Druckablassrate eingestellt werden kann.

Eine langsame Druckentlastung ist beispielsweise vorteilhaft, um zu verhindern, dass das Gargut, in dem sich bei dem Garvorgang ein innerer Druck aufgebaut hat, durch eine zu schnelle Druckentlastung in seiner Konsistenz zerstört wird. Hier ist ein langsameres Druckablassen vorteilhaft, um so dem Gargut Gelegenheit zu geben, inneren hohen Druck langsam abzubauen ohne hier eine Konsistenzänderung zu erleiden.

Dies ist jedoch von der Art des Garguts abhängig, so dass die Wahl von verschiedenen Druckentlastungsgeschwindigkeiten vorteilhaft ist.

Die verschiedenen Druckablassraten können beispielsweise durch eine einzelne Öffnung, die verschieden stark geöffnet oder geschlossen wird, eingestellt werden. Die verschiedenen Druckablassraten sind hier also nicht durch den Bediener einstellbar, sondern sind vielmehr durch die Konstruktionen des Dampfkochtopfs vorgegeben, beispielsweise durch verschiedene Anschlagspositionen, Rastpositionen oder ähnliches des Bedienelements.

Die verschiedenen Druckablassraten können aber auch durch verschiedene Öffnungen erreicht werden. So kann zum Beispiel eine zweite Öffnung für den Druckablass vorgesehen sein. Durch die beiden Öffnungen ist es möglich, nur eine oder beide Öffnungen zu öffnen, um so verschieden schnelle Druckentlastungen zu ermöglichen. Die beiden Öffnungen können den gleichen oder unterschiedliche Ausströmwiderstände haben. Der Ausströmwiderstand ist für die Druckablassrate maßgebend.

Auch ist es möglich, dass beide Öffnungen verschiedene Ausströmwiderstände haben (beispielsweise durch verschiedene minimale Ausströmquerschnitte), da dann eine noch größere Variation der Druckentlastungszeiten möglich ist. Bei Druckentlastung durch die beiden Öffnungen wird die schnellste Druckentlastung erreicht, bei Druckentlastung durch die Öffnung mit dem niedrigeren Ausströmwiderstand wird eine mittelschnelle Druckentlastung erreicht und bei der Druckentlastung durch die Öffnung mit dem größeren Ausströmwiderstand wird die langsamste Druckentlastung erreicht.

In einer vorteilhaften Ausführungsform ist der Ausströmwiderstand von mindestens einer der beiden Öffnungen oder auch von beiden Öffnungen von dem Druck in dem Dampfkochtopf beeinflusst. Ist der Druck hoch, so ist auch der Ausströmwiderstand hoch, ist der Druck niedrig so sinkt der Ausströmwiderstand. Hierdurch kann ein gleichmäßiges Druckablassen erreicht werden. Hierzu können beispielsweise Druckreduzierventile oder Ähnliches eingesetzt werden, die zwischen dem Garraum und die Auslassöffnung gestaltet werden, so dass bei einem Druck in dem Garraum oberhalb eines vorgegebenen Drucks an der Auslassöffnung immer derselbe Druck anliegt. Auch andere querschnittsverändernde Ventile oder Bauteile können für ein gleichmäßiges Druckablassen eingesetzt werden.

Durch die Wahl von verschiedenen in den Ansprüchen erwähnten Ausströmquerschnitten können die Ausströmwiderstände eingestellt werden.

Der Dampfkochtopf kann beispielsweise so ausgestaltet sein, dass ein Druck von 1 bar Überdruck auf 0,04 bar, Überdruck in einer vorgegebenen Zeit zwischen 10 Sekunden und 2 Minuten abfällt. Auch kann zumindest eine der Öffnungen so ausgebildet sein, dass der Druck zwischen den obigen Werten in nicht mehr als 15 bis 5 Sekunden abfällt. Mit zwei verschieden gestalteten Öffnungen mit verschiedenen Querschnitten können sowohl schnelle als auch langsame Druckentlastungen erreicht werden. Die Druckangaben (von 1 bar auf 0,04 bar) dienen hier nur zu einer Definition der Druckentlastungsraten bzw. der Ausströmwiderstände. Mit denselben Druckentlastungsraten oder Ausströmraten sind auch Druckentlastungen von z. B. 0,04 auf 0,01 bar oder von 0,5 auf 0,1 bar möglich.

Die größere Druckablassrate kann vorteilhafterweise erst dann eingestellt werden, wenn der Druck unter einen vorgegebenen Überdruck (z. B. 0,04 bar) gefallen ist. Dadurch wird sichergestellt, dass keine größeren Mengen heißen Dampfs in kurzer Zeit austreten können, was zu Verbrühungen führen könnte. Eine langsamere Druckablassrate kann jedoch bei jedem Druck eingestellt werden, um unter den vorgegebenen Überdruck zu kommen, um dann auf die größere Druckablassrate zu wechseln.

Beide Öffnungen werden vorzugsweise mit ein und demselben Bedienelement bedient.

Eine Öffnung kann beispielsweise durch das Bedienelement verschlossen werden, indem das Bedienelement mit einem mechanisch festen Teil, wie beispielsweise einer Drehwelle oder einem daran angeordneten Nocken, auf ein elastisches Dichtelement drückt, das dann seinerseits eine Öffnung in dem Dampfkochtopf verschließt. Falls die .Drehwelle nicht kreisrund ist, kann so die Öffnung in verschiedenen Stellungen freigegeben oder verschlossen werden.

Eine der Öffnungen kann auch mit einem Druckventil versehen sein, so dass durch die Öffnung ein Druckabbau bei Erreichen eines Maximaldrucks erfolgt. Die Vorspannung eines elastischen Elements, wie etwa einer Feder dieses Druckventils, kann durch das Bedienelement festgelegt werden.

Die erste und/oder die zweite Öffnung ist in einem abnehmbaren Deckel des Dampfkochtopfs vorgesehen. Der Deckel wird am oberen Ende des Garraums vorgesehen sein, so dass durch die Öffnungen in der Regel nur Gas austreten wird, nicht jedoch Flüssigkeit oder Ähnliches.

Ein Dampfkochtopf umfasst eine Druckerfassungseinrichtung. Bei diesem Dampfkochtopf ist ein mechanischer Teil vorgesehen, der ein durch den Druck bewegliches Teil umfasst. Weiterhin ist ein elektronischer Teil vorgesehen, der die Position dieses beweglichen Teils erfasst, um so den Druck bestimmen zu können.

Der mechanische Teil der Druckerfassungseinrichtung kann so verstellt werden, dass die Beziehung zwischen dem Druck und der Position des beweglichen Teils verändert werden kann.

So kann beispielsweise ein Solldruck eingestellt werden, wobei durch die Einstellung des Solldrucks der mechanische Teil der Druckerfassungseinrichtung so verstellt wird, dass für die verschiedenen Solldrücke die Position des beweglichen Teils jeweils gleich ist. Dies erleichtert die Messung bei unterschiedlichen Solldrücken unter Ausnützung des gesamten zur Verfügung stehenden Messbereichs.

Der mechanische und der elektronische Teil wirken vorzugsweise berührungslos miteinander, da dies in der Regel störunanfällige Systeme erlaubt.

Weiterhin wird hierdurch erreicht, dass der elektronische Teil von dem mechanischen Teil abnehmbar ist und dies vorzugsweise werkzeuglos. Das Abnehmen des elektronischen Teils kann zu Reinigungszwecken oder auch aus anderen Gründen (siehe unten) erfolgen.

Der elektronische Teil umfasst vorzugsweise weiterhin einen Signalgeber, der ein von dem erfassten Druck abhängiges Signal erzeugen kann.

Der Signalgeber kann beispielsweise eine Anzeige wie eine LED, ein Display oder einen akustischen Signalgeber, wie einen Summer oder ein Lautsprecher oder einen Piepser oder Ähnliches, umfassen.

Bevorzugt ist weiterhin eine Ausführungsform, bei der der Signalgeber eine funksignalerzeugende Einrichtung umfasst. Hiermit kann der erfasste Druck an andere elektronische Einrichtungen per Funk übermittelt werden. Dies kann beispielsweise zur Steuerung des Herdes, auf dem ein Dampfkochtopf aufgestellt ist, dienen, um die Erreichung eines Solldrucks oder Solldruckbereichs oder eine Einhaltung desselben zu gewährleisten, kann jedoch auch alle anderen möglichen Vorgänge auslösen, wie etwa das Versenden einer E-Mail, Abspielen einer Tonfolge oder einer Musik, eine Telefonnachricht oder Ähnliches.

Der Signalgeber ist vorzugsweise so ausgebildet, dass bei Über- oder Unterschreiten eines oder mehrerer vorgegebener Solldrücke ein Signal erzeugt wird. Dies sind relativ einfach erfassbare und verarbeitbare Signale, so dass der elektronische Teil der Druckerfassungseinrichtung möglichst einfach ausgebildet werden kann, jedoch die wesentliche Information erfassbar ist.

Nach Über- oder Unterschreiten eines oder mehrerer Solldrücke kann ein Signal beispielsweise auch für eine voreingestellte Zeit ausgegeben werden. Beispielsweise nach dem Unterschreiten eines vorgegebenen Minimaldrucks, wie etwa 0,04 bar, kann für eine Zeit von 5 Minuten oder auch mehr oder weniger, wie beispielsweise jede Zeit zwischen einer halben Minute und 10 Minuten, noch ein Signal ausgegeben werden, welches andeutet, dass der Minimaldruck unterschritten wurde.

Der Signalgeber kann vorzugsweise kontinuierlich oder quasi kontinuierlich ein Signal erzeugen. Somit kann kontinuierlich oder quasi kontinuierlich der Druckwert erfasst werden. Der Druck kann absolut, also in Druckeinheiten oder relativ zu einem Sollwert angegeben werden. Letzteres kann beispielsweise in Prozentangaben erfolgen.

Quasi kontinuierlich soll auch ein solches Signal sein, das in sehr kurzen Zeitabständen, wie etwa jede Sekunde oder jede Zehntelsekunde oder Ähnliches, erzeugt wird.

Die Druckerfassungseinrichtung ist vorzugsweise mit einem Zeitmesser gekoppelt. Dadurch kann die Zeit, bei der ein bestimmter Druck vorliegt, erfasst werden.

Der mechanische Teil ist vorzugsweise von außen zurücksetzbar, für den Fall, dass sich dieser mal verklemmt hat.

Ein Dampfkochtopf weist einen Zeitmesser auf. Für die Garung in einem Dampfkochtopf steht in der Regel nur die Kontrolle über die Zeit zur Verfügung, da in dem geschlossenen Dampfkochtopf mit Druck eine Kontrolle des Garzustands nur durch Druckablassen und Öffnen des Dampfkochtopfs möglich ist. Daher ist es vorteilhaft, wenn der Dampfkochtopf selbst einen Zeitmesser umfasst, da so die Zeitkontrolle vereinfacht wird.

Besonders vorteilhaft ist es, wenn der Zeitmesser mit einer Druckerfassungseinrichtung gekoppelt ist. Diese Kopplung kann beispielsweise so ausgestaltet sein, dass bei Überschreiten eines einstellbaren Solldrucks eine Zeitmessung ausgelöst wird. Für die Druckgarung ist in der Regel lediglich die Zeit bei dem Solldruck bzw. bei dem höchsten Druck relevant, da hier die Garung am schnellsten stattfindet. Somit ist in der Regel die Zeit ab Erreichen dieses Solldrucks zur Erfassung der nötigen Garzeit ausreichend.

Der Solldruck, bei dem die Zeitmessung ausgelöst wird, ist vorzugsweise wählbar, wobei diese Festsetzung vorzugsweise mechanisch und/oder elektronisch erfolgt. Wird beispielsweise die Vorspannung eines elastischen Elements wie einer Feder bei einer Druckerfassungseinrichtung mechanisch verstellt, so wird auch der Solldruck, bei dem die Zeitmessung ausgelöst wird, geändert. Jedoch ist auch eine elektronische Verstellung des Solldrucks möglich, indem der Druck elektronisch erfasst wird und die Schwelle, bei der die Zeitmessung ausgelöst wird, elektronisch anders gesetzt wird.

Auch kann die Zeitmessung manuell ausgelöst werden, wozu der Zeitmesser vorzugsweise eine Betätigungseinrichtung umfasst. Diese Betätigungseinrichtung kann beispielsweise ein Taster oder Ähnliches sein.

Weiterhin sind vorzugsweise Einstellmittel vorgesehen, mit denen eine Zeitspanne eingestellt werden kann. Hier ist es beispielsweise möglich, die vorher bestimmte Garzeit einzustellen, wie etwa eine Zeitspanne von 5 Minuten oder Ähnliches. Derartige Zeitspannen können beispielsweise in Bedingungsanleitungen, in Kochbüchern oder Ähnlichem vorgegeben werden.

Der Zeitmesser errechnet ab einem Auslösen der Zeitmessung die verbleibende Restzeit dieser Zeitspanne und kann diese vorzugsweise anzeigen. Jedoch wäre es auch möglich, lediglich das Ablaufen einer solchen Zeitspanne anzuzeigen, ohne die verbleibende Restzeit anzuzeigen. Für eine bessere Information des Bedieners ist es jedoch vorteilhaft, die verbleibende Restzeit anzuzeigen.

Der Zeitmesser ist vorzugsweise abnehmbar. Dies erfolgt vorzugsweise werkzeuglos. Somit ist es beispielsweise möglich, nachdem der Garvorgang durch das Erhitzen des Dampfkochtopfs eingeleitet worden ist, der entsprechende Solldruck erreicht worden ist und die Zeitmessung ausgelöst wurde, den Zeitmesser abzunehmen und so die Zeitmessung an anderer Stelle als in der Nähe von dem Dampfkochtopf mitverfolgen zu können. Beispielweise kann der Raum, in dem der Dampfkochtopf erhitzt wird, verlassen werden und weiterhin ein Bediener die Zeitmessung mitverfolgen.

Hierzu ist es insbesondere vorteilhaft, wenn zumindest die Zeitmessung funktionsfähig bleibt, für den Fall, dass der Zeitmesser abgenommen wurde.

Der Zeitmesser kann dann auch während des Kochvorgangs wieder aufgesetzt werden und erkennt vorzugsweise dabei die neue Druckposition, verarbeitet diese und gibt ein aktualisiertes Signal ab. Der Zeitmesser kann auch so ausgebildet sein, dass er erkennt, nicht mehr auf dem Dampfkochtopf aufgesetzt zu sein. Er gibt dann keine Signale ab, die einen Druck wiedergeben. Der Zeitmesser kann aber auch das zuletzt vor dem Abnehmen ausgegebene Signal beibehalten.

Der Zeitmesser ist vorzugsweise so ausgebildet, dass er ein Ende-Signal nach Ablauf der eingestellten Zeitspanne erzeugen kann. Die eingestellte Zeitspanne ist vorzugsweise auch noch während des Ablaufs der Zeitmessung korrigierbar bzw. feststellbar. Wenn beispielsweise von einer eingestellten Zeitspanne von 5 Minuten bereits 3 1/2 Minuten verstrichen sind, kann die Restzeit auf beispielsweise 2 1/2 Minuten oder 2 Minuten oder einen anderen Zeitwert verstellt werden. Hierbei ist eine Verstellmöglichkeit um jeweils 1 Minute und/oder 1 Sekunde vorteilhaft.

Sollten während des Garvorgangs beispielsweise die Temperatur und der Druck in dem Dampfkochtopf absinken, kann auf diese Weise die benötigte Garzeit erhöht werden.

Das Ende-Signal kann optisch oder akustisch angezeigt werden. Auch ist es möglich, das Ende-Signal an eine Funksignalerzeugungseinrichtung weiterzugeben, die ein Ende-Signal per Funk übermittelt. Dieses Ende-Signal kann beispielsweise von einem Herd empfangen werden, der daraufhin die Erhitzung des Dampfkochtopfs beendet. Auch kann das Ende-Signal in einem Telefonanruf, einer E-Mail, einer elektronischen Nachricht, dem Abspielen einer Tonfolge oder einer Musik oder Ähnlichem liegen.

Zur Energieversorgung des Zeit- und/oder Druckmessers können eine Batterie, ein wiederaufladbarer Akku, eine Brennstoffzelle, eine Solarzelle, ein Seebeckelement, oder ein Element, das die Dampfenergie ausnutzt, eingesetzt werden.

Weiterhin sind vorzugsweise Mittel vorgesehen, mit denen ein Ende-Signal für eine voreingestellte Zeit ausgegeben wird.

Bevorzugte Ausführungsformen sind in den Zeichnungen dargestellt. Hierbei zeigen:

| | |
|---|---|
| Fig. 1 | eine dreidimensionale schematische Ansicht eines Dampfkochtopfs; |
| Fig. 2 | eine schematische dreidimensionale Zeichnung eines auseinandergenommenen Dampfkochtopfs; |
| Fig. 3 | eine schematische Schnittzeichnung eines Griffs und eines Deckels eines Dampfkochtopfs; |
| Fig. 4 | eine Draufsicht auf einen Griff; |
| Fig. 5 | eine Draufsicht auf einen Deckel; |
| Fig. 6 | eine schematische Darstellung einer Vorrichtung zum Verschließen einer Öffnung eines Dampfkochtopfs; |
| Fig. 7 | eine dreidimensionale schematische Schnittdarstellung einer Druckerfassungseinrichtung; |
| Fig. 8 | eine schematische Schnittzeichnung der Druckerfassungsvorrichtung aus Fig. 7; |
| Fig. 9 | eine dreidimensionale schematische Ansicht der Druckerfassungsvorrichtung aus Fig. 7 und 8; |
| Fig. 10 | eine schematische Schnittzeichnung eines Druckablassventils; |
| Fig. 11 | eine dreidimensionale schematische Darstellung des Druckablassventils aus Fig. 10; |
| Fig. 12 | eine schematische Schnittansicht der Verstellung des Druckventils aus Fig. 10 und 11; |
| Fig. 13 | eine dreidimensionale schematische Darstellung der Teile einer Öffnungsverriegelung; |
| Fig. 14 | eine schematische Darstellung des Druckverlaufs bei einem Garvorgang mit verschiedenen charakteristischen Zeiten; |
| Fig. 15 | zwei Ansichten eines Zeitmessers und/oder einer elektronischen Druckerfassungseinrichtung; |
| Fig. 16 | verschiedene Ansichten eines Lagerbocks der Welle; |
| Fig. 17 | verschiedene Ansichten der Griffteile; |
| Fig. 18 | schematische Ansichten eines Verriegelungsmechanismuses. |

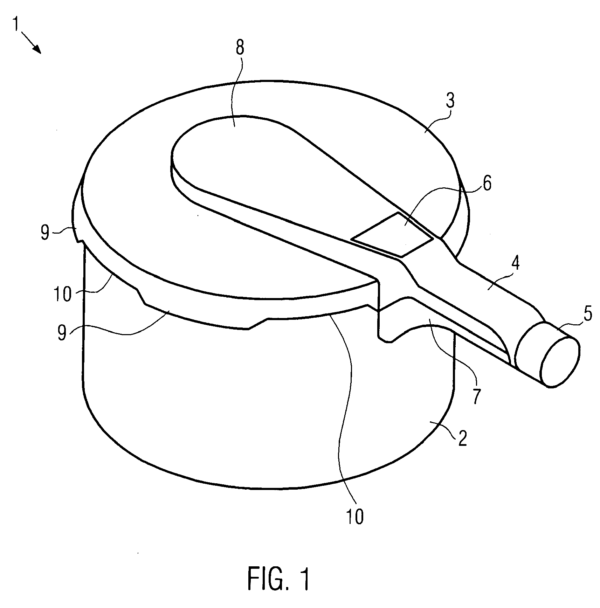

In Fig. 1 ist ein Dampfkochtopf 1 gezeigt. Der Dampfkochtopf hat einen Topf 2, der mit einem Deckel 3 verschlossen werden kann. Der Dampfkochtopf verfügt über einen Griff 4, der aus zwei Teilen 7, 8 besteht. Der Teil 7 ist mit dem Topf 2 verbunden und der Teil 8 ist mit dem Decker 3 verbunden. Diese Verbindung ist vorzugsweise lösbar.

An dem Ende des Griffs 4 (in Fig. 1 ganz rechts) ist ein Betätigungselement 5 angeordnet. Wie in Fig. 1 zu sehen ist, ist dieses Betätigungselement seitlich von dem Bereich oberhalb des Topfs 2, also oberhalb des Garraums, angeordnet. In dieser Position ist eine Betätigung des Betätigungselements 5 ungefährlich.

Zum Öffnen und Schließen des Topfs kann der Deckel 3 auf dem Topf 2 gedreht werden, wobei dies durch die Drehung der Griffteile 7 und 8 relativ zueinander erfolgen kann.

Der Deckel 3 weist an seinem Rand einwärts gebogene Abschnitte 10 auf, die zwischen unverformten Bereichen 9 angeordnet sind. Mit diesen Bereichen 10 kann der Deckel auf dem Topf nach Art eines Bajonettverschlusses gehalten werden.

In dem Griff 4 ist ein elektronischer Teil 6 integriert. Dieser ist vorzugsweise abnehmbar.

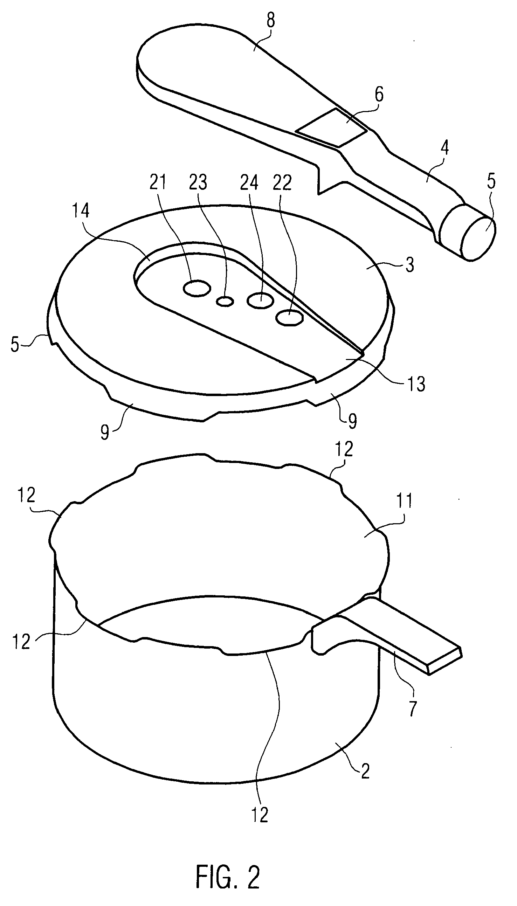

In Fig. 2 ist der Kochtopf in einer Darstellung gezeigt, bei der der Deckel 3 von dem Topf 2 nach oben hin abgesetzt dargestellt ist und der Griff 4 nach oben von dem Deckel 3 abgesetzt, dargestellt ist. In dieser Darstellung sind nach außen umgebogene Abschnitte 12 am oberen Topfrand erkennbar, die mit den einwärts gebogenen Abschnitten 10 des Deckels 3 zusammenwirken, um so bei Druck den Deckel 3 auf den Topf 2 zu halten. Im Inneren des Topfes 2 befindet sich der Garraum 11. In dem Deckel 3 oder am Topfrand kann eine Dichtung angeordnet sein, die bei verschlossenem Topf den Bereich zwischen Topf 2 und Deckel 3 abschließt.

Während der Griffteil 7 fest an dem Topf 2 angeordnet ist, beispielsweise mit einer Schraube oder Ähnlichem, ist der Griff 4 werkzeuglos von dem Deckel 3 lösbar. Dies erleichtert die Reinigung sowohl des Deckels 3 als auch des Griffs 4.

Wie in der Darstellung in Fig. 2 ersichtlich, weist der Deckel 3 eine Vertiefung 13 auf, die an dem nach links zeigenden Ende der Vertiefung 13 mit einer Schrägung 14 endet. Diese Schrägung 14 dient dazu, einen kontrollierten Gasaustritt aus dem Dampfkochtopf 1 in einer Abstrahlrichtung im Vergleich zu der Horizontalen von 10 bis 60°, vorzugsweise 30 bis 50°, zu ermöglichen.

Der Deckel 3 weist in der Vertiefung 13 mehrere Öffnungen 21 bis 24 auf. Die mehreren Öffnungen 21 bis 24 müssen nicht zwangsläufig in einer Vertiefung 13 angeordnet sein.

Die Vertiefung 13 dient auch dazu, den Griff 4 tiefer in dem Deckel 3 anzuordnen, so dass der Dampfkochtopf 1 insgesamt eine niedrigere Bauhöhe hat. Auch kann die Deckelform mit der Vertiefung als Zentrierhilfe für das Aufsetzen des Griffs 4 dienen.

Die Funktion der verschiedenen Öffnungen 21 bis 24 wird im Weiteren erläutert werden.

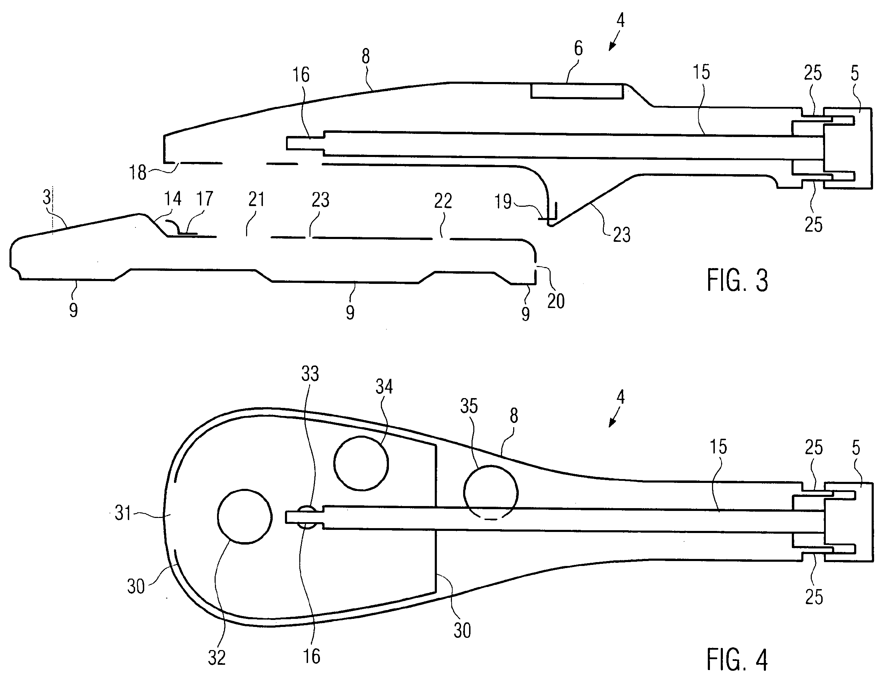

In Fig. 3 ist ein Schnitt durch eine Mittelebene des Griffs 4 und des Deckels 3 dargestellt. In Fig. 3 ist rechts das Bedienelement 5 des Griffs 4 dargestellt. Dies ist im Gegensatz zu Fig. 1 und 2 in einer nach rechts gezogenen Position dargestellt. Das Bedienelement 5 kann sowohl gedreht werden, als auch in der Ebene der Fig. 3 nach rechts und links bewegt werden.

Mit dem Betätigungselement 5 ist eine Welle 15 verbunden, wobei die Verbindung hier auf vielfältige Art und Weise ausgebildet sein kann. Beispielsweise ist eine Verbindungstechnik mit einer Schraube, einem Rasthaken oder Ähnlichem möglich. Auch ist es möglich, die Welle 15 und das Betätigungselement 5 einstückig auszubilden.

Die Welle 15 hat einen verjüngten Teil 16 an ihrem Ende, um die Lagerung der Welle 16 zu erleichtern. Nötig ist diese Verjüngung 16 jedoch nicht.

Der Deckel 3 weist auf seiner Oberseite (in der Vertiefung 13) einen Haken 17 auf und in diesen Haken 17 kann eine Öffnung 18 des Griffs 4 eingehängt werden, wobei der Griff 4 dann mit einer Schwenkbewegung um den Haken 17 herum nach unten in die Horizontale geschwenkt werden kann. Ein verlagerbarer Haken 19 in dem Griff 4 kann in eine Öffnung 20 des Deckels 3 einrasten. Auf diese Weise sind der Griff 4 und der Deckel 3 fest miteinander verbunden. Durch Bewegung des Hakens 19 in Fig. 3 nach rechts und ein Nachobenschwenken des Griffs 4 um den Haken 17 können Deckel 3 und Griff 4 wieder voneinander gelöst werden.

In Fig. 3 sind in dem Schnitt die Öffnung 21 und eine seitlich versetzte Öffnung 22 zu erkennen. Weiterhin ist eine kleinere Öffnung 23 dargestellt.

Wie in der Fig. 3 zu erkennen, hat die Schräge 14 einen Winkel von ca. 45° mit der Horizontalen, um so einen Gasausstoß aus dem Dampfkochtopf in eine Richtung schräg nach oben zu erreichen. Dadurch wird erreicht, dass Dampf in den Bereich einer Dampfabzugshaube oder Ähnliches gerichtet wird, um so eine Befeuchtung oder Verschmutzung von Wänden oder Ähnlichem in einer Küche zu verringern.

Der Haken 19 ist an einem nach unten vorstehenden Teil 23 des Griffs 4 angeordnet. Dadurch wird es möglich, den Griff 4 um eine Ecke des Deckels 3 herum anzuordnen, um eine gute Arretierung des Griffs 4 bzw. des Teils 8 an dem Deckel 3 zu ermöglichen.

In Fig. 4 ist eine schematische Darstellung des Griffs 4 mit Blick von oben auf den Griff 4 dargestellt. Hier sind nur ausgewählte Elemente gezeigt, da diese sonst durch andere Elemente verdeckt würden. Der Griff 4 umfasst eine Druckanzeige 32, Mittel 33 zum Verschließen einer Öffnung 23, ein Druckventil 34 und eine Druckerfassungseinrichtung 35, die im Weiteren näher erläutert werden sollen.

An der Unterseite des Griffs 4 ist eine Dichtung 30 angeordnet, die zumindest die Öffnung 33 und das Druckventil 34 so einschließt, dass dort austretendes Gas bei einer Öffnung 31 der Dichtung 30 in Fig. 4 nach links ausgegeben wird. Das aus der Öffnung 31 der Dichtung 30 austretende Gas wird auf die Schräge 14 in dem Deckel 3 gerichtet.

Wie in Fig. 4 zu erkennen, ist die Welle 15 oberhalb oder neben dem Mittel 33, dem Druckventil 34 und der Druckerfassungseinrichtung 35 angeordnet.

Die Welle 15 ist in den Fig. 3 und 4 vereinfacht dargestellt. Details der Welle 15 werden in den nachfolgenden Figuren erläutert.

Auf der mit 25 bezeichneten Oberfläche können eine farbige oder eine symbolische Markierung oder ein Text angebracht sein. Hiermit kann angedeutet werden, dass bei voll herausgezogenem Bedienelement 5 der Deckel 3 von dem Topf 2 durch Drehung abgenommen werden kann. Die Markierung kann z. B. grün sein oder ein Symbol, dass das Deckelöffnen symbolisiert. Die Markierung oder der entsprechende Text ist nur dann sichtbar, wenn das Bedienelement soweit herausgezogen ist, dass der Deckel gedreht werden kann.

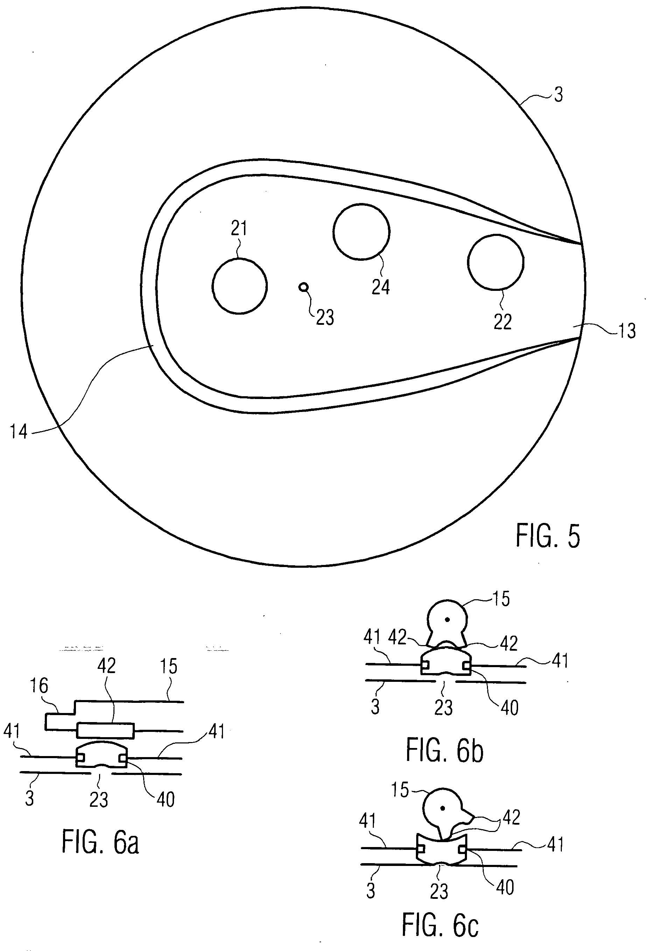

Eine Draufsicht auf den Deckel 3 ist in Fig. 5 gezeigt.

Der Deckel 3 weist vier Öffnungen auf, wobei die Öffnungen 21 und 23 auf der Mittelachse der Vertiefung 13 liegen, die Öffnungen 24 und 22 jedoch neben der Mittelachse liegen. Die Öffnung 23 ist deutlich kleiner als die Öffnung 24. Durch diese beiden Öffnungen kann Gas aus dem Garraum austreten. Die anderen Öffnungen werden so verschlossen, dass ein Gassaustritt nicht möglich ist.

Die Öffnung 21 ist für die Druckanzeige 32 vorgesehen, die Öffnung 23 für die Verschließung mit dem Element 33 aus Fig. 4, die Öffnung 24 für das Druckventil 34 und die Öffnung 22 für die Druckerfassungseinrichtung 35.

In Fig. 6a ist ein Teil des Deckels 3 in einer Schnittdarstellung gezeigt. Der Schnitt verläuft entlang der Welle 15. Der Griff 4 bzw. der Teil 8 weist eine untere Platte 41 auf, die, wie in Fig. 3 beschrieben, oberhalb von dem Deckel 3 fixiert ist. In dieser Platte 41 ist ein elastisches Element 40 angeordnet, wie etwa ein Gummielement. Die Welle 15 verläuft oberhalb von diesem elastischen Element 40. Das Element 40 ist über der Öffnung 23 in dem Deckel 3 angeordnet.

Die Welle 15 weist einen oder mehrere Nocken 42 auf. Ein Schnitt senkrecht zu dem Schnitt aus Fig. 6a ist in Fig. 6b dargestellt. Die Welle 15 befindet sich hierbei in einer Mittelstellung, bei der sowohl rechts als auch links Nocken 42 zu erkennen sind.

In Fig. 6c ist ein Zustand gezeigt, bei dem die Welle 15 um etwa 30 bis 40° gedreht wurde. Durch diese Drehung drückt der Nocken 42 als festes mechanisches Teil auf das elastische Element 40 (Dichtungselement) und verformt dieses so nach unten, dass es die Öffnung 23 verschließt. Durch eine Drehung der Welle 15 in die entgegengesetzte Richtung (ausgehend von Fig. 6b) würde der andere Nocken 42 zu derselben Verformung führen. In verdrehten Positionen ist die Öffnung 23 somit immer geschlossen.

Durch die Mittelstellung (siehe Fig. 6b) ist die Öffnung 23 jedoch geöffnet.

Eine Drehung der Welle 15, ausgehend von Fig. 6b, nach rechts oder links (siehe Fig. 6c) entspricht der Drehung der Welle 15 in zwei verschiedene Kochstufen. Dies wird weiter unten noch näher erläutert. Die Mittelstellung (siehe Fig. 6b) entspricht einer Null- oder Ruhestellung, da hierbei die Öffnung 23 geöffnet ist, so dass ein Druckaufbau in dem Dampfkochtopf nicht möglich ist.

Auch wenn die Drehung nach rechts oder links zwei verschiedene Kochstufen bewirken soll, so sind die Nocken 42 gleich bzw. symmetrisch. D.h. auch für verschiedene Kochstufen ist die Abdichtung der Öffnung 23 gleich. Es kann jedoch bei verschiedenen Kochstufen auch verschieden stark auf das elastische Element 40 gedrückt werden. Die Nocken 42 können also auch verschieden sein.

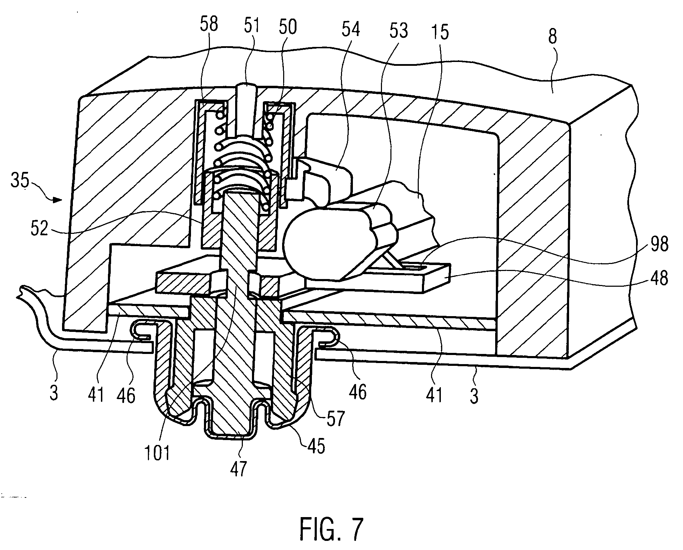

In Fig. 7 ist die Druckerfassungseinrichtung 35 in einem dreidimensionalen Schnitt dargestellt. Hier ist im unteren Teil der Deckel 3 im Bereich der Vertiefung 13 (siehe Fig. 5) dargestellt. Hierbei ist der Bereich um die Öffnung 22 (siehe Fig. 5) zu erkennen. In dieser Öffnung 22 ist ein Gummibalg 45 von oben eingesetzt. Der Gummibalg ist an dem Griff 8 befestigt. Der Griff verfügt über eine untere Platte 41, in die ein Halteteil 57 eingesetzt ist. Dieses Halteteil 57 hält den Gummibalg 45. Der Gummibalg 45 hat Endabschnitte 46, die durch Zusammendrücken zwischen dem Deckel 3 und der Platte 41 dichtend schließen. Der Gummibalg 45 weist an seinem unteren Ende Faltungen auf, die eine Bewegung des mittleren Teils des Gummibalgs 45 ermöglichen. Die Bewegung erfolgt in Fig. 7 auf und ab. In dem mittleren Teil ist ein Kolben 47 angeordnet. Dieser weist einen Rand auf, der eine Führung des Kolbens 47 durch das Halteelement 57 bei einer Auf- und Abbewegung ermöglicht.

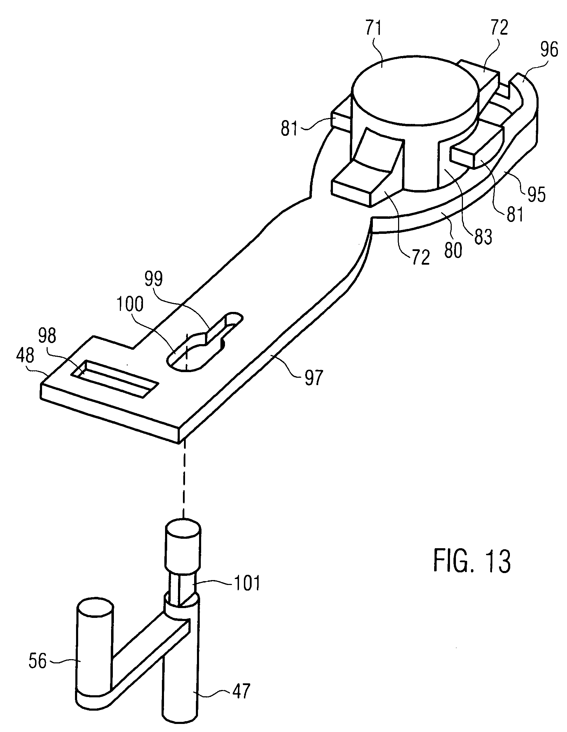

Der Kolben 47 erstreckt sich durch eine Öffnung in der Platte 41 nach oben hin. Der Kolben 47 hat eine Verengung 101, die in Bezug auf Fig. 13 noch näher erläutert wird.

Am oberen Ende des Kolbens 47 ist eine topfartige Struktur 52 ausgebildet, in die von oben eine Feder 50 eingesetzt werden kann. Die Feder 50 wird hierbei zwischen dem oberen Ende des Kolbens 47 und der topfartigen Struktur 52 geführt. Die topfartige Struktur 52 ihrerseits wird in einer umgekehrten topfartigen Struktur 58 geführt.

Das obere Ende der Feder 50 ist um einen rohrförmigen Abschnitt 51 angeordnet, so dass die Feder 50 in ihrer Position gehalten wird. Dieser Abschnitt 51 umfasst ein oberes Loch in dem Griff 8. Durch diese Öffnung bzw. diesen rohrförmigen Abschnitt 51 können ein Stift, ein Nagel, eine Nadel oder Ähnliches eingesetzt werden, mit dem von oben auf den Kolben 47 gedrückt werden kann, falls sich dieser mal verklemmen sollte.

Das obere Ende der Feder 50 ruht auf dem obenliegenden inneren Ende der topfartigen Struktur 58.

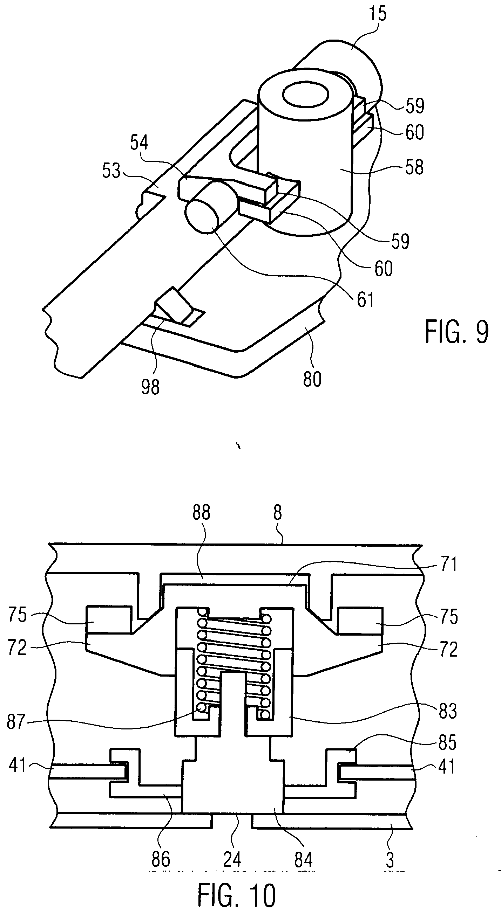

In Fig. 7 ist die Welle 15 mit Nocken 53 dargestellt. Die Nocken 53 wirken mit einem Nockenfolger 54 zusammen wie in Bezug auf Fig. 9 erläutert werden wird. Der Nocken 53 hat in seiner Mitte eine Vertiefung, die mit dem gegen den Nocken vorgespannten Nockenfolger eine Rastposition (vordefinierte Drehstellung) definiert. Der Nocken ist rechts und links dieser Vertiefung asymmetrisch, um verschiedene Kochstufen zu realisieren. Mit der in Figur 7 dargestellten Drehstellung ist die Drehwelle in einer Position in einer Kochstufe.

Weiterhin ist in Fig. 7 ein Bauteil 48 gezeigt, das in Fig. 13 noch näher erläutert werden wird.

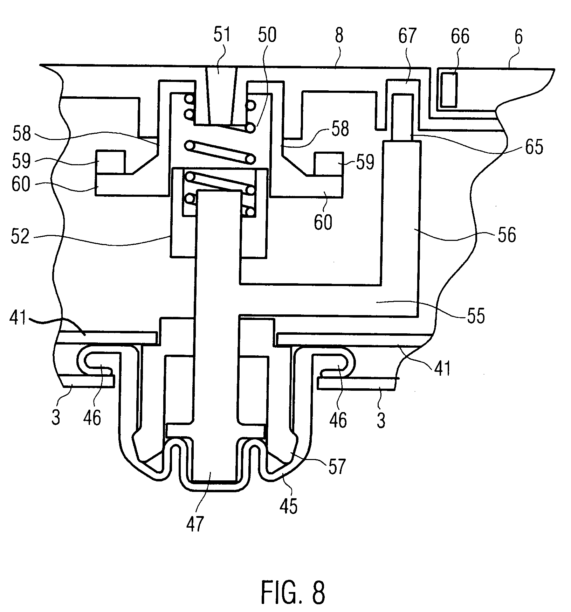

In Fig. 8 ist ein schematischer Schnitt durch die Druckerfassungseinrichtung 35 aus Fig. 7 gezeigt, wobei der Schnitt senkrecht zu dem Schnitt in Fig. 7 ist. In Fig. 8 ist der Gummibalg 45 mit dem Kolben 47 erkennbar.

Der Kolben 47 weist einen in Fig. 8 nach rechts und in Fig. 7 nach hinten stehenden Teil 55 auf, an den sich ein zweiter senkrechter Teil 56 anschließt. In diesem Schnitt hat der Kolben 47 die Struktur eines umgedrehten kleinen h-Buchstabens.

Die obere topfartige Struktur 58, die oben gegen die Feder 50 drückt, weist in dem Schnitt in Fig. 8 Ausstülpungen 60 auf. Auf diese Ausstülpungen 60 können die Enden 59 eines Wippelements drücken (siehe Fig. 9). Drücken diese Enden 59 die Ausstülpungen 60 in Fig. 8 nach unten, so wird die Feder 50 stärker vorgespannt. Damit der Kolben 47 durch den Druck in dem Garraum nach oben gedrückt wird, ist hier somit ein höherer Druck bzw. eine höhere Kraft notwendig. Die Beziehung zwischen der Position des Kolbens 47 (auch verlagerbares Messelement oder mechanischer Teil genannt) und dem Druck in dem Garraum wird somit geändert.

An dem oberen Ende des Armes 56 ist ein Stift 65 angeordnet. Dieser ist in einem Raum 67 auf- und abbewegbar je nach Bewegung des Kolbens 47. Neben diesem Stift 65 ist ein Positionsdetektor 66 angeordnet. Ist der Stift 65 beispielsweise ferromagnetisch oder aus einem gut magnetisierbaren Material, so kann eine geänderte Hallspannung oder Ähnliches in dem Detektor 66 zur Detektion der Position des Stifts 65 eingesetzt werden. Jede andere Art der Positionserkennung des Stifts 65 ist möglich. Beispielsweise kann er auch die Kapazität eines Kondensators in dem Detektor 66 ändern, wobei diese Änderung zur Druckerfassung erfasst wird.

Der Detektor 66 und der Stift 65 arbeiten berührungslos. Der Detektor 66 ist Teil des elektronischen Teils 6, das vorzugsweise abnehmbar ist. In der Oberseite des Griffs 8 ist hierfür eine Vertiefung vorgesehen.

Die Druckerfassungseinrichtung aus Fig. 8 ist nicht für das Druckablassen vorgesehen, sondern lediglich, um den Druck zu erfassen. Diese Druckerfassung ist mechanisch verstellbar.

Wie in der dreidimensionalen Zeichnung in Fig. 9 zu erkennen, verfügt die Welle 15 über Nocken 53, die mit einem Nockenfolger 54 zusammenarbeiten. Der Nockenfolger 54 ist an einer Wippe angeordnet, wobei das andere Ende der Wippe die Enden 59 sind (siehe auch Fig. 8). Durch die Feder 50 wird die obere topfartige Struktur 58 nach oben hin vorgespannt. Über die mechanische Kraftübertragung über die Wippe wird somit der Nockenfolger 54 nach unten gegen den Nocken 53 vorgespannt. Durch verschieden hohe Nocken 53 an der Welle 15 können verschiedene Beziehungen zwischen der Auslenkung des Kolbens 47 und dem Druck in dem Garraum erreicht werden.

Die Wippe ist drehbar um eine Achse 61 gelagert, wobei die Achse zwischen dem Nockenfolger 54 und dem Ende 59 liegt. Die Wippe ist so ausgebildet, dass sie an die topfartige Struktur 58 auf zwei gegenüberliegenden Seiten angreifen kann.

Die Welle 15 verfügt ferner über eine Ausbuchtung, die in eine Vertiefung 98 eines Teils 80 ragt, das in Bezug auf Fig. 13 näher erläutert werden wird.

Durch verschiedene Nocken 53 an der Welle 15 können verschiedene Kochstufen eingestellt werden. Verschiedene Kochstufen bedeutet verschiedene Solldrücke. Je nach vorgewählter Kochstufe bzw. vorgewähltem Solldruck erreicht bei einem Druckaufbau in dem Garraum das Element 65 immer die gleiche Position, so dass für den Detektor 66 unabhängig von der Kochstufe immer nur eine vorgegebene Position des Elements 65 bedeutet, dass der Solldruck erreicht wurde. Ist durch Drehung der Drehwelle 15 ein großer Nocken bei dem Nockenfolger 54 positioniert, so wird die topfartige Struktur 58 sehr stark nach unten bewegt, womit die Vorspannung durch die Feder 50 stark erhöht wird. Nun bedarf es eines großen Drucks, um das Element 65 in die Position zu bringen, bei der der Detektor 66 das Erreichen des Solldrucks detektiert. Durch einen kleineren Nocken 53 wird diese Position schon bei einem geringeren Druck erreicht.

Auf diese Weise kann durch Verdrehung der Drehwelle 15 der Druck, bei dem ein Erreichen eines Solldrucks festgestellt werden soll, variiert werden, wobei die Position des Elements 65, bei der das Erreichen eines Solldrucks festgestellt werden soll, jedoch immer gleich ist. Hierdurch kann die Elektronik des Sensors 66 möglichst einfach ausgestaltet werden.

Für die Öffnung 21 (siehe Figur 5) ist ein Balg, wie in Figur 7 unter Bezugszeichen 45, vorgesehen, um diese Öffnung zu verschließen. In dem Balg ist ein mit einer Feder vorgespannter Kolben vorgesehen, dessen oberes Ende nach oben aus dem Griff herausragen kann, je nach Druck in dem Garraum. Durch diese Druckanzeige kann somit leicht von außen erkennbar der Druck im Garraum angezeigt werden.

In den Fig. 10, 11 und 12 ist ein Druckablassventil 34 schematisch dargestellt. In Fig. 10 ist eine Öffnung 24 in dem Deckel 3 gezeigt. Oberhalb von dem Deckel 3 und oberhalb von der Öffnung 24 ist ein elastisches Element 86 angeordnet. Das elastische Element 86 wird in einer Öffnung der Platte 41 des Griffs 8 gehalten. Das elastische Element 86 ist verformbar. In dem elastischen Element 86 ist ein Stempel 84 angeordnet, der die Öffnung 23 verschließen kann.

Der Stempel 84 ist an seinem oberen Ende von einer topfartigen Struktur 83 umgeben, die von einer oberen topfartigen Struktur 71 umgeben ist. Beide topfartigen Strukturen können sich gegeneinander bewegen.

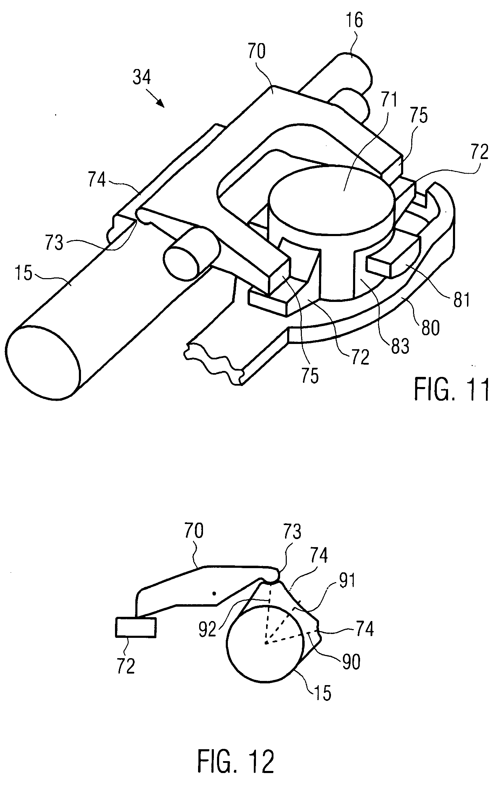

Zwischen diesen beiden topfartigen Strukturen ist eine Feder 87 angeordnet, die die beiden Strukturen auseinanderdrückt. Dadurch wird der Stempel 84 nach unten durch die Feder 87 vorgespannt. Die Vorspannung hängt jedoch von der Position der oberen topfartigen Struktur 71 ab. Diese Struktur wird in von der Oberseite des Griffs 8 herabstehenden Stiften oder einen Ring geführt. Während die Feder 87 die obere topfartige Struktur 71 nach oben vorspannt, können Enden 75 einer Wippe 70 (siehe Fig. 11) die topfartige Struktur nach unten vorspannen. Dadurch können die Enden 75 der Wippe 70 auf die Ausstülpungen 72 der oberen topfartigen Struktur 71 nach unten drücken.

Wie in Fig. 11 gezeigt, ist die Wippe 70 drehbar um eine Drehachse gelagert, die zwischen einem Nockenfolger 73 und dem Wippenende 75 liegt. Auch hier ist die Wippe so ausgebildet, dass sie die topfartige Struktur 71 umgreift und an zwei gegenüberliegenden Seiten auf diese topfartige Struktur aufdrücken kann.

Die Wippe 70 mit dem Nockenfolger 73 wird durch die Drehung der Welle 15 mit Nocken 74 verstellt. Dadurch kann die Vorspannung der Feder 87 des Druckablassventils eingestellt werden. Ist die Drehwelle 15 in einer solchen Stellung, dass die Wippe stark ausgelenkt wird, drückt diese mit den Enden 75 die obertopfartige Struktur 71 weit nach unten. Dadurch wird durch die Kraft der Feder 87 der Stempel 84 nach unten bewegt, so dass die Öffnung 24 verschlossen wird. Baut sich in dem Garraum ein erhöhter Druck auf, so drückt dieser Druck gegen den Stempel 84 und damit gegen die Kraft der Feder 87. Wird der Druck zu groß, so vermag der Druck den Stempel so weit wegzubewegen, dass die Öffnung 24 zumindest geringfügig freigegeben wird, so dass sich der Überdruck abbauen kann. Das hier austretende Gas verlässt den Bereich zwischen dem Deckel 3 und dem Griff 4 durch die Öffnung 31 einer Dichtung 30 (siehe Fig. 4).

Wie in Fig. 12 in einer Schnittzeichnung durch die Wippe 70 schematisch dargestellt, können verschiedene Nocken 74 die Wippe 70 verschieden stark auslenken. Die Längen der Linien 90, 91 und 92 sind verschieden. In einer Mittelstellung befindet sich der Nockenfolger 73 am Ende der Linie 91 und ist somit relativ wenig ausgelenkt. Dies bedeutet, dass die obere topfartige Struktur 71 nicht nach unten gedrückt wird, so dass mit relativ geringem Gegendruck das Ventil 34 geöffnet werden kann.

Diese Stellung entspricht der oben erwähnten Mittelstellung.

Durch Drehung der Drehwelle von dieser Mittelstellung nach rechts oder links wird der Nockenfolger 73 in Kontakt mit einem Nocken 74 am Ende der Linie 90 oder 92 gebracht. Die Linien 90 und 92 haben verschiedene Längen, was bedeutet, dass die Position des Nockenfolgers 73 eher unterschiedliche Abstände zu der Mitte der Drehung der Welle 15 hat. Hierdurch sind verschiedene Auslenkungen der Wippe 70 möglich. Hierdurch werden also verschiedene Vorspannungen der Feder 87 eingestellt und somit verschiedene Drücke vorgegeben, bei denen das Druckventil 34 die Öffnung 24 freigibt. Der Druck, bei dem das Druckventil 34 öffnet, kann z. B. ein x-faches (etwa das 1,5-fache) des Solldrucks sein. Der Solldruck kann derjenige Druck sein, bei dem die Druckerfassung eine Zeitmessung auslöst.

Die obere topfartige Struktur 72 kann auch noch mit einer Feder im Raum 88 (z. B. in Form einer Blattfeder; nicht dargestellt) nach unten vorgespannt werden. Dadurch wird der Stempel 84 über die Feder 87 nach unten vorgespannt, um unabhängig von der Wippe eine gewisse Mindestvorspannung für den Stempel 84 nach unten zu haben, damit die Öffnung 24 bei drucklosem Garraum oder bei niedrigen Drücken im Garraum geschlossen ist.

An der unteren topfartigen Struktur 83 sind, wie in Fig. 11 zu erkennen, noch Ausstülpungen 81 angeordnet. Die Funktion dieser Ausstülpungen 81 ist in Fig. 13 erläutert.

In Fig. 13 sind die Welle und die Wippe aus Fig. 11 weggelassen, so dass ein Schieberteil 80 sichtbar wird. Dies ist ein Schieberteil, das in Richtung entlang der Welle 15 (siehe Fig. 11) bewegt werden kann. Die Welle 15 greift hierzu mit einer Ausstülpung in eine Aussparung 98 des Schieberteils 80 (siehe auch Fig. 7 und 9).

Das Schieberteil 80 hat einen flachen Teil 97 und einen Endteil mit einer Schrägung 95. Diese Schrägung greift unter die Ausstülpung 81 der unteren topfartigen Struktur 83. Wird das in Fig. 13 dargestellte Schieberteil 80 nach links vorne gezogen, so gleiten diese Ausstülpung 81 auf den Schrägungen 95 entlang und werden durch die Bewegung des Schieberteils 80 nach oben geschoben, entgegen der Kraft der Feder 87. Dadurch wird der Einfluss der Wippe 70 aufgehoben. Die Öffnung 24 wird somit unabhängig von der Feder 87 oder der Wippenstellung geöffnet.

Die untere topfartige Struktur 83 hat zwei gegenüberliegende Ausstülpungen 81, die beide von dem Schieberelement 80 betätigt werden.

Die Bewegung des Schieberelements 80 wird durch eine Linearbewegung der Welle 15 verursacht. Durch die Linearbewegung der Welle 15 kann somit das Druckventil 34 so geöffnet werden, dass ein Druckablass durch die Öffnung 24 in jedem Fall möglich ist.

Das Schieberteil 80 umschließt die obere topfartige Struktur 71 und die untere topfartige Struktur 83 ringformartig. Dadurch wird ein zu weites Verschieben der Schieberstruktur 80 nach links vorne in Fig. 13 verhindert. Das Ende 96 der Schieberstruktur 80 kommt dabei mit der oberen topfartigen Struktur 71 zum Anschlag. Dies verhindert auch ein weiteres Hinausziehen der Drehwelle 15 als die in Figur 3 und 4 gezeigte Position.

Durch die Verschiebung des Schieberteils 80 kann somit auch bei hohem Druck eine schnelle Druckentlastung erreicht werden.

Durch die lineare Verschiebung der Drehwelle soll auch eine Entriegelung des Deckels 3 derart erreicht werden, dass der Deckel 3 gegenüber dem Topf 2 gedreht und abgenommen werden kann. Dies darf bei Druck in dem Topf jedoch nicht geschehen, da dies zu einem schlagartigen Freisetzen von größeren Dampfmengen und somit zu hohen Verletzungsgefahren führen kann.

Um diese Bewegung der Drehwelle und damit auch des Schiebers 80 bei Druck in dem Topf zu verhindern, ist in dem Schieber 80 eine schlüssellochförmige Öffnung 99 vorgesehen. Diese Öffnung 99 wirkt mit dem Kolben 47 aus der Druckerfassungseinrichtung 35 zusammen. Der Kolben 47 der Druckerfassungseinrichtung 35 hat eine Verengung 101 (siehe auch Fig. 7). In einer Position des Kolbens 47 kann der enge Teil der schlüssellochartigen Öffnung 99 entlang der Einengung 101 des Kolbens 47 verschoben werden. Ist jedoch ein Druck in dem Garraum und der Kolben 47 in einer angehobenen Position, bei der sich der Kolben 47 mit seinem kreisrunden Bereich oder mit seinem erweiterten Bereich in der erweiterten Öffnung 100 der schlüssellochartigen Öffnung 99 befindet, so ist durch den Kolben 47 ein Verschieben des Schieberteils 80 blockiert. Erst wenn der Druck in dem Garraum so weit abgesunken ist, dass der Kolben 47 mit seiner Verjüngung 101 in der Höhe des schlüssellochartigen Lochs 99 des Schieberteils 80 angekommen ist, kann dieses Schieberteil 80 in Fig. 13 nach vorne verschoben werden, um so die Öffnung 24 freizugeben.

Durch den langlochartig ausgeführten erweiterten Teil 100 der Öffnung in dem Schieberteil 80 wird jedoch sichergestellt, dass bei hohem Druck in dem Garraum eine sehr schnelle Druckentlastung immer möglich ist. Erst ab Unterschreiten eines vorgegebenen Minimaldrucks wird die Bewegung des Bedienelements bis in eine maximal herausgezogene Position möglich, in der der Deckel 3 von dem Topf 2 entfernt werden kann.

Eine Druckentlastung auch bei hohem Druck, jedoch durch eine viel kleinere Öffnung, nämlich die Öffnung 23, wird durch die in Bezug auf die Figur 6 erläuterte Mittelstellung erreicht.

Bei hohem Druck kann also durch Mittelstellung der Welle 15 bzw. des Betätigungselements 5 ein langsamer Druckabbau erreicht werden. Durch ein Herausziehen des Betätigungselements 5 bzw. der Welle 15 kann die große Öffnung 24 freigegeben werden, so dass ein Druck zügig abgebaut werden kann. Das Betätigungselement kann verschieden weit herausgezogen werden, so dass sich verschieden große Querschnitte für den Druckablass und somit verschiedene vom Benutzer einstellbare Druckablassraten ergeben. Bei ganz geöffnetem Ventil der Öffnung 24 ergibt sich eine durch die Konstruktion vorgegebene Druckablassrate. Mit den Öffnungen 23 und 24 werden somit verschiedene Druckablassraten durch die Konstruktion vorgegeben, wohingegen durch die Einstellbarkeit des Öffnungsgrads des Ventils der Öffnung 24 eine variable Druckablassrate gegeben wird, die jedoch Werte annehmen kann, die größer sind, als die durch die Öffnung 23 gegebene Druckablassrate.

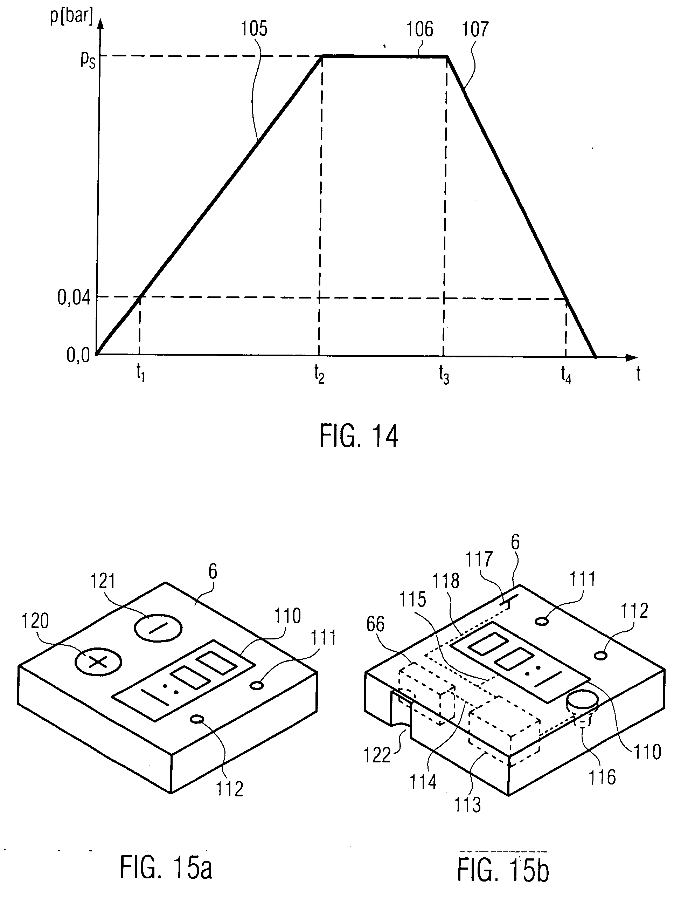

In Fig. 14 ist schematisch der Druckverlauf während eines Kochvorgangs dargestellt. Ausgehend von einem Überdruck von 0 bar ist ein kritischer Schwellwert der Druck von 0,04 bar. Ab Erreichen dieses Drucks erfasst eine Druckerfassungseinrichtung das Überschreiten dieses Druckwerts. Die Druckerfassungseinrichtung kann dann ein elektrisches Signal erzeugen, so dass beispielsweise eine LED in dem Teil 6 (siehe auch Fig. 15) rot leuchtet oder rot blinkt. Dieser Zustand bleibt ab dem Zeitpunkt t1 bis zu dem Zeitpunkt t4, bei dem dieser Druckwert von 0,04 bar wieder unterschritten wird.

Nach dem Zeitpunkt t1 steigt der Druck weiter an, entlang der Kurve 105. Dies muss nicht linear, wie in Fig. 14 gesehen, sondern kann beliebig geschehen. Bei Erreichen eines eingestellten Solldrucks pₛ zur Zeit t2 beginnt eine Zeitmessung. Der Druck steigt dann nicht weiter (siehe Kurve 106), da entweder Dampf durch Abblasen abgelassen wird oder die Energiezufuhr reduziert wird. Nach Ablauf der Zeitmessung wird ein Ende-Signal erzeugt. Entweder manuell oder automatisch wird die Energiezufuhr zu dem Dampfkochtopf unterbrochen, so dass der Druck p wieder absinkt (siehe Kurve 107). Dies kann entweder dadurch geschehen, dass die Öffnung 23 zum langsamen Druckablassen und zusätzlich die Öffnung 24 zum schnellen Druckablassen freigegeben wird und/oder dadurch, dass die Temperatur des Dampfkochtopfs absinkt. Nach Unterschreiten des Referenzdrucks von 0,04 bar wird ein entsprechendes Signal erzeugt, so dass beispielsweise eine grüne Leuchtanzeige zu leuchten beginnt. Dies signalisiert, dass der Dampfkochtopf im Wesentlichen druckfrei ist bzw. der Restdruck so gering ist, dass der Dampfkochtopf problemlos durch Abnehmen des Deckels 3 geöffnet werden kann.

Dieses grüne Signal kann eine Daueranzeige oder auch blinkend sein. Dieses Signal erfolgt für eine voreingestellte Zeit, wie beispielsweise 5 Minuten, und danach erlischt die Anzeige.

In Fig. 15 ist der elektronische Teil 6 schematisch dargestellt. Fig. 15a zeigt die Oberseite von vom. Es sind Bedienelemente 120, 121 vorgesehen, die zum Einstellen einer Zeitspanne dienen. Durch den Plustaster 120 kann die eingestellte Zeitspanne beispielsweise um eine Minute oder eine Sekunde erhöht werden. Durch den Taster 121 kann die Zeitspanne entsprechend erniedrigt werden.

Es ist weiterhin eine Anzeige 110 vorgesehen, in der die Zeitspanne bzw. eine Restlaufzeit dieser Zeitspanne angezeigt wird. Die Anzeige kann hinterleuchtet sein, um die Ablesbarkeit zu verbessern.

Die Bezugszeichen 111, 112 kennzeichnen optische Anzeigen, wie beispielsweise LEDs, die verschiedene Farben haben können. Beide optischen Anzeigen 111, 112 können auch in einem Element integriert sein, das in verschiedenen Farben leuchten kann, um den Druckzustand oder den druckfreien Zustand anzuzeigen.

Die LEDs können auch nach oben aus dem elektronischen Teil 6 herausstehen, damit das optische Signal leicht aus einer Richtung von seitlich neben dem Topf erkannt werden kann, damit eine Bedienperson sich nicht in den evtl. heißen und somit gefährlichen Bereich oberhalb des Topfs begeben muss, um das Signal abzulesen. Hierzu können kleine Dome für die oder von den LEDs vorgesehen sein.

In Fig. 15b ist der elektronische Teil 6 gedreht dargestellt und die Bedienelemente 120, 121 sind der Übersichtlichkeit halber weggelassen. An der Rückseite des elektronischen Teils 6, die in Fig. 15b sichtbar ist, ist eine Einbuchtung 122. Neben dieser Einbuchtung 122 ist der elektronische Detektor 66 (siehe Fig. 8) vorgesehen. Die Einbuchtung 122 erleichtert eine Anordnung des Stifts 65 derart, dass der Detektor 66 den Stift zumindest teilweise umschließt. Je mehr der Detektor 66 den Stift 65 umschließt, desto leichter bzw. präziser ist die Detektion. Der Stift 65 kann auch ganz von dem elektronischen Teil 6 umgeben sein (in Draufsicht). Dabei ist dann in dem elektronischen Teil auf der Unterseite eine Vertiefung, in die der Stift 65 hineinragen kann, so dass seine Position gut ermittelbar ist.

Das elektronische Teil 6 ist von dem Dampfkochtopf 1 lösbar. Der Detektor 66 und der Stift 65 (in Fig. 8) arbeiten berührungslos.

Mit dem Detektor 66 wird in dem elektronischen Teil 6 die Position des Stifts 65 erfasst und damit ein Druck bzw. ein Solldruck detektiert. Das Ergebnis dieser Detektion wird an einen Signalgeber 113 weitergeleitet. Dieser ist mit einer akustischen Ausgabeeinheit 116 der optischen Ausgabeeinheit 110 (und/oder Anzeige 111, 112) über eine Verbindung 115 und/oder mit einer Antenne 117 über eine Leitung 118 verbunden. Es kann auch nur eine Antenne oder nur eine optische Anzeige oder nur eine akustische Anzeige oder beliebige Kombination davon vorgesehen sein.

Mit der Antenne 117 können Funksignale über den Druck oder über eine Zeitinformation bzw. die Information, dass eine Zeitspanne abgelaufen ist oder jede andere relevante Information, gesendet werden.

Mit den Tastern 120, 121 oder einem weiteren Taster kann auch manuell eine Zeitmessung ausgelöst werden, beispielsweise durch Drücken von beiden Tastern 120, 121 gleichzeitig.

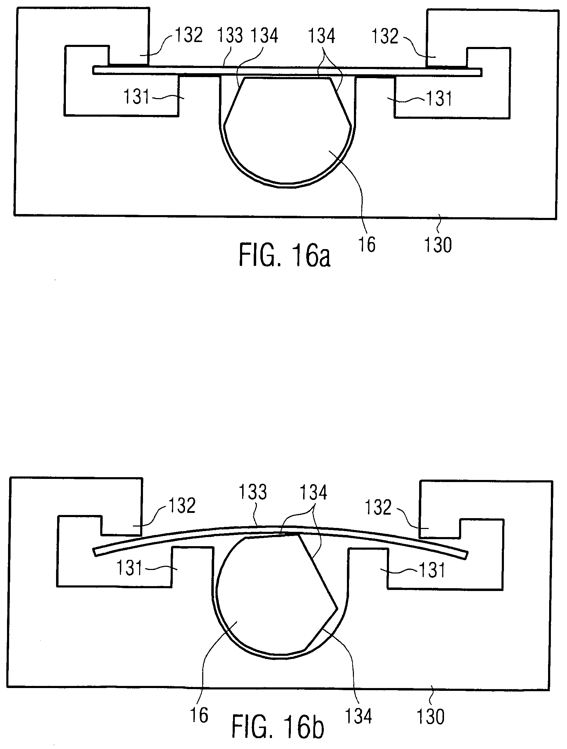

In Fig. 16a ist die Lagerung für die Verjüngung 16 der Welle 15 gezeigt. In einem Lagerbock 130 ist eine Blattfeder 133 angeordnet. Die Verjüngung 16 weist mehrere Abflachung 134 auf. Es können am Umfang statt drei Abflachung 134 auch nur eine, zwei oder mehr als drei Abflachungen vorgesehen sein. Die Abflachungen 134 wirken mit der Blattfeder 133 derart zusammen, dass Rastpositionen der Welle 15 vorgegeben oder verstärkt werden. Die Blattfeder 133 ist in einem Lagerbock 130 gehalten. Sie wird auf beiden Seiten der Welle 15 zwischen jeweils zwei Vorsprüngen 131, 132 gehalten. Mit dieser Konstruktion können auch relativ dünne Blattfedern präzise gehalten werden, auch wenn der Lagerbock 130 etwaige Produktionsungenauigkeiten bei seinen Abmessungen zeigt.

In Fig. 16b ist gezeigt, wie durch Drehen der Welle 15 und damit der Verjüngung 16 die mittlere Abflachung 134 von der Blattfeder 133 wegbewegt wird, so dass die Blattfeder 133 ausgelenkt wird. Dazu ist eine gewisse Kraft nötig, die beim Drehen der Welle gespürt wird.

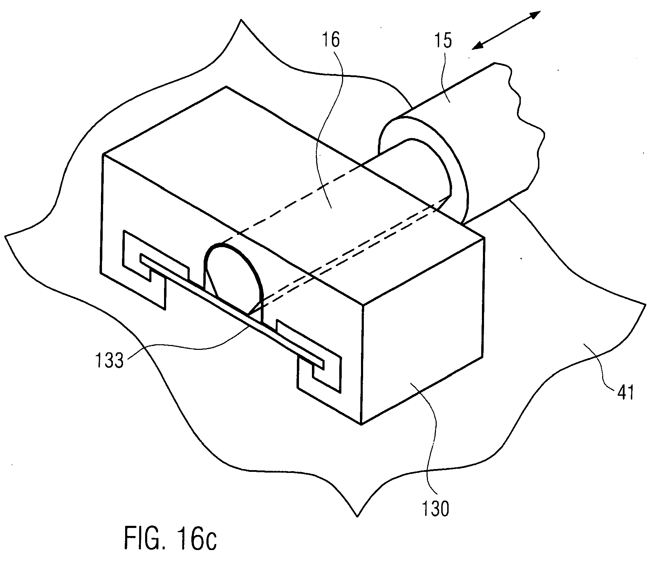

In Fig. 16c ist die Anordnung des Lagerbocks 130 in dem Griffteil 8 gezeigt. Von oben wird er von der (nicht dargestellten) Innenseite der Oberseite des Griffteils 8 gehalten, wobei hierfür in dieser Innenseite entsprechende Halterungen vorgesehen sind. In dieser Position wird der Lagerbock 130 durch die Platte 41 gehalten, so dass er nicht herausfallen kann. Eine weitere Fixierung, wie durch Kleber oder spezielle Rastmittel, in dem Griffteil 8 ist zwar möglich, kann hier jedoch auch entfallen, da der Lagerbock 130 durch die Platte 41 gehalten wird. Die Welle 15 kann in Richtung des Doppelpfeils bewegt werden.

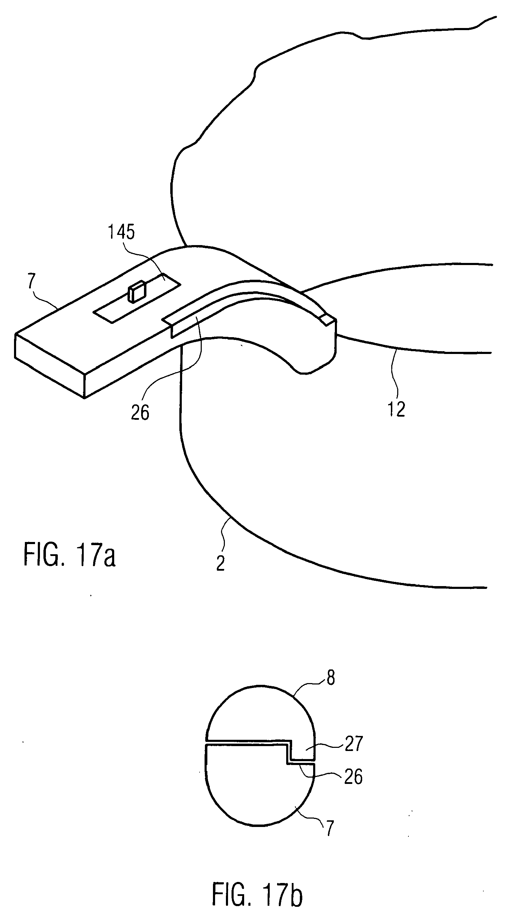

In Fig. 17a ist das Griffteil 7 aus Fig. 2 noch mal vergrößert dargestellt. Hier ist die Ausnehmung 26 in der dem Griffteil 8 zugewandten Seite an deren Rand vergrößert dargestellt. In Fig. 17b ist das Griffteil 7 und 8 im Bereich der Ausnehmung 26 im Schnitt dargestellt. Der Vorsprung 27 passt hier genau in die Vertiefung 26. Durch die Vertiefung 26 und den Vorsprung 27 kann der Griffteil 8 gegenüber dem Griffteil 7 in Fig. 2 oder 17 nach rechts gedreht werden. Bei einer Drehung nach links stößt der Vorsprung 27 an die Innenflanke der Vertiefung 26 an, so dass eine weitere Drehung verhindert wird. Dies dient zum positionsgenauen und einfachen Aufsetzen des Deckels 3 auf den Topf 2. Die Mittel, die dies ermöglichen, sind in Bezug auf den Deckel und den Topf jeweils feststehende Teile.

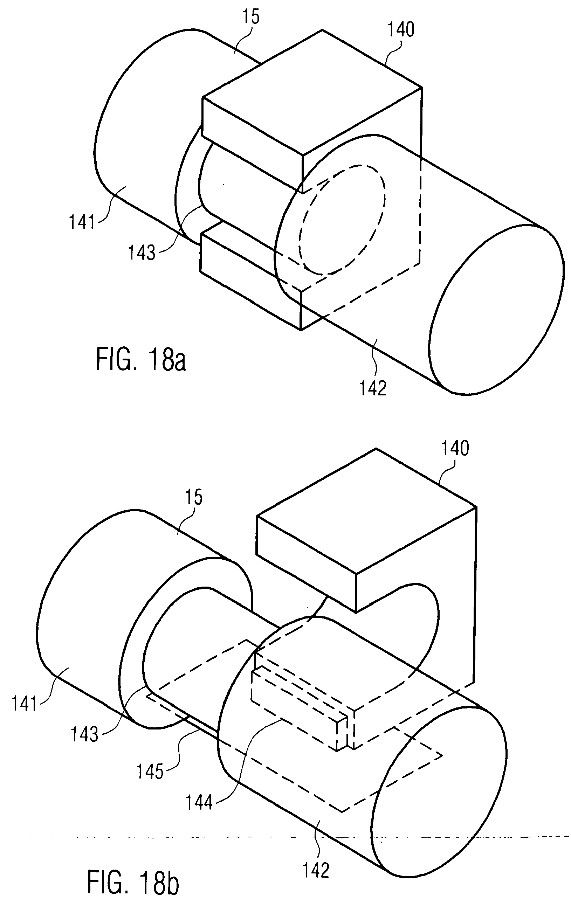

In Fig. 17 ist noch ein Anschlagelement 145 gezeigt, dass im Zusammenhang mit Fig. 18 näher erläutert wird. Das Anschlagelement 145 ist mit dem unteren Griffteil 7 verbunden. Es kann feststehend sein oder auch in Richtung längs der Welle 15 in dem Griffteil 8 verschiebbar sein.

In Fig. 18a und 18b ist ein Verriegelungsmechanismus für die Welle 15 gezeigt, die in den Griff 4 integriert ist. Dieser Verriegelungsmechanismus verhindert eine Verschiebbarkeit der Welle 15, für den Fall, dass der Deckel 3 von dem Topf 2 abgenommen ist. Der Verriegelungsmechanismus umfasst ein Verriegelungselement 140, das U-förmig ausgebildet ist. Es kann seitlich in eine Verjüngung 143 der Welle 15 eingreifen und dadurch eine Verschiebung der Welle 15 relativ zu dem Verriegelungselement 140 verhindern. Das Verriegelungselement 140 ist in dem oberen Griffteil 8 eingebaut. Es kann in einer Richtung in Fig. 18a von links unten nach rechts oben verschoben werden, um die Welle 15 freizugeben. Dies ist in Fig. 18b gezeigt. Das Verriegelungselement 140 ist hier von dem Anschlagelement 144 im Vergleich zu der Welle 15 nach rechts oben verschoben worden. Das Anschlagelement 144 ist in dem Griffteil 7 auf dessen Oberseite vorgesehen. Das Anschlagelement 144 kann z. B. auf einer Art Schiffchen 145 vorgesehen sein, welches das Anschlagelement trägt. Das Schiffchen kann bei der Situation, wie sie in Fig. 18b dargestellt ist, zusammen mit der Welle 15 verschoben werden oder aber auch feststehend sein, so dass die Welle 15 an dem Anschlagelement 144 vorbei geschoben wird.

Das Verriegelungselement 140 ist in einer Richtung zu der Position hin, in der die Welle verriegelt ist, vorgespannt, z.B. durch ein federndes Element. Aus dieser Position heraus wird es dann erst bei Verschließen des Topfs 2 mit dem Deckel 3 herausbewegt, da es bei dem Drehen des Deckels 3 mit dem Anschlagelement 144 in Anschlag kommt, so dass bei aufgesetztem und in die Kochposition (s. Fig. 1) gebrachten Deckel 3 die Welle 15 zur Linearverschiebung freigegeben ist.

## Patentansprüche

1. Dampfkochtopf (1) mit einem Griff (4) mit einem eine Drehwelle (15) umfassenden Bedienelement,
**dadurch gekennzeichnet, dass**
die Drehwelle (15) sich aus einem Bereich oberhalb des Garraums (11) im Wesentlichen horizontal zur Seite erstreckt und in mindestens zwei, drei, vier oder mehr vordefinierte Drehstellungen, wie beispielsweise Raststellungen, gebracht werden kann, die verschiedene Einstellungen des Dampfkochtopfs (1) bewirken.

2. Dampfkochtopf nach Anspruch 1, **dadurch gekennzeichnet, dass** die Drehwelle (15) in dem Griff (4), insbesondere in dem seitlich abstehenden Teil, aufgenommen ist.

3. Dampfkochtopf nach Anspruch 1 oder 2, **dadurch gekennzeichnet, dass** die Drehwelle (15) mit einem Betätigungselement (5) versehen ist, wobei das Betätigungselement (5) vorzugsweise am Griffende vorgesehen ist.

4. Dampfkochtopf nach Anspruch 3, **dadurch gekennzeichnet, dass** das Betätigungselement (5) vollständig seitlich von dem Garraum (11) angeordnet ist.

5. Dampfkochtopf nach einem der Ansprüche 1 bis 4, **dadurch gekennzeichnet, dass** an der Drehwelle (15) mindestens ein, zwei oder drei Nocken (42, 53, 74) vorgesehen sind, mit denen mechanische Elemente des Dampfkochtopfs (1) verstellt werden können.

6. Dampfkochtopf nach Anspruch 5, **dadurch gekennzeichnet, dass** je Nocken mindestens eine, zwei oder drei Wippelemente (54, 59, 70) vorgesehen sind, die mit den jeweiligen Nocken (53, 74) zusammenwirken.

7. Dampfkochtopf nach einem der Ansprüche 1 bis 6, **dadurch gekennzeichnet, dass** durch Drehung der Drehwelle (15) der maximale Solldruck des Dampfkochtopfs (1) eingestellt wird.

8. Dampfkochtopf nach einem der Ansprüche 1 bis 7, **dadurch gekennzeichnet, dass** durch Drehung der Drehwelle (15) der Auslösedruck für eine Zeiterfassung eingestellt wird.

9. Dampfkochtopf nach einem der Ansprüche 1 bis 8, **dadurch gekennzeichnet, dass** durch Drehung der Drehwelle (15) eine Öffnung (23) zum Druckablassen geöffnet oder geschlossen werden kann.

10. Dampfkochtopf nach einem der Ansprüche 1 bis 9, **dadurch gekennzeichnet, dass** die Drehwelle (15) zur Bedienung des Dampfkochtopfs linear verschiebbar ist.

11. Dampfkochtopf nach einem der Ansprüche 1 bis 10, **dadurch gekennzeichnet, dass** durch lineares Verschieben der Drehwelle (15) eine Öffnung (24) des Dampfkochtopfs zum Druckablassen geöffnet oder geschlossen werden kann.

12. Dampfkochtopf nach einem der Ansprüche 1 bis 11, **dadurch gekennzeichnet, dass** durch Drehung und/oder Verschiebung der Drehwelle (15) die Vorspannung eines mit einem elastischen Element, wie etwa einer Feder (87), vorspannbaren Druckventils (34) variiert werden kann.

13. Dampfkochtopf nach einem der Ansprüche 1 bis 12, **dadurch gekennzeichnet, dass** durch Drehung der Drehwelle (15) die Vorspannung eines mit einem elastischen Element, wie etwa einer Feder (50), vorspannbaren Druckmessers (35) variiert werden kann.

14. Dampfkochtopf nach Anspruch 13, **dadurch gekennzeichnet, dass** der Druckmesser (35) eine elektronischen Auswerteeinrichtung (66) umfasst, die vorzugsweise den Druck und/oder das Erreichen einer oder mehrerer Druckstufen und/oder das Überschreiten einer oder mehrerer Druckstufen und/oder das Unterschreiten einer oder mehrere Druckstufen erfassen kann.

15. Dampfkochtopf nach einem der Ansprüche 13 oder 14, **dadurch gekennzeichnet, dass** der Druckmesser (35) ein durch den Druck verlagerbares Messelement (65) umfasst, wobei die elektronische Auswerteeinrichtung (66) zur Druckbestimmung die Position des verlagerbaren Messelements (65) erfasst.

16. Dampfkochtopf nach Anspruch 15, **dadurch gekennzeichnet, dass** durch die Variation der Vorspannung des Druckmessers (35) die Beziehung zwischen Druck in dem Dampfkochtopf (1) und der Position des verlagerbaren Messelements (65) geändert wird.

17. Dampfkochtopf nach Anspruch 15 oder 16, **dadurch gekennzeichnet, dass** das verlagerbare Messelement (65) von außen in eine Ruhestellung gebracht werden kann, wobei hierzu beispielsweise ein Loch (51) im Gehäuse vorgesehen ist, durch das ein Stift geschoben werden kann, um das verlagerbare Messelement (65) in die Ruhestellung zu bringen.

18. Dampfkochtopf nach einem der Ansprüche 1 bis 17, **dadurch gekennzeichnet, dass** die Drehwelle (15) geradlinig und/oder biegsam und/oder mit einem oder mehreren flexiblen Stellen versehen ist.

19. Dampfkochtopf nach einem der Ansprüche 1 bis 18, **dadurch gekennzeichnet, dass** mit der Drehwelle (15) der Druck aus dem Dampfkochtopf durch eine Öffnung mit mindestens zwei vorgegebenen verschiedenen Druckablassraten oder mit mindestens einer vorgegebenen und mit einer bis zu größeren Werten als der vorgegebene Wert einstellbaren Druckablassrate abgelassen werden kann.

20. Dampfkochtopf nach Anspruch 19, **dadurch gekennzeichnet, dass** zwei verschiedene Öffnungen (23, 24) zum Druckablassen vorgesehen sind.

21. Dampfkochtopf nach Anspruch 20, **dadurch gekennzeichnet, dass** die beiden Öffnungen (23, 24) verschiedenen Ausströmwiderstände, wie etwa durch verschiedene minimale Ausströmquerschnitte, haben.

22. Dampfkochtopf nach einem der Ansprüche 19 bis 21, **dadurch gekennzeichnet, dass** mindestens eine der Öffnungen (23, 24) oder beide einen Ausströmwiderstand haben, der durch den Druck in dem Dampfkochtopf (1) beeinflusst wird, wie beispielsweise bei einem Druckreduzierventil oder einem je nach Druck querschnittsverändemden Ventil.

23. Dampfkochtopf nach einem der Ansprüche 21 bis 22, **dadurch gekennzeichnet, dass** die Öffnung (23) einen minimalen Ausströmquerschnitt von nicht mehr als 0,1, 0,2, 0,5, 1,0, 1,5, 2,0, 2,5 oder 3,0 mm² hat.

24. Dampfkochtopf nach einem der Ansprüche 19 bis 23, **dadurch gekennzeichnet, dass** die Öffnung (23) bei voll geöffneter Öffnung einen Ausströmwiderstand hat, so dass der Druck in dem Dampfkochtopf von 1 bar Überdruck auf 0,04 bar Überdruck in einer Zeit von mindestens 10s, 20s, 30s, 40s, 50s, 1 min, 1 min 15s, 1 min 30 s, 2 min abfallen kann.

25. Dampfkochtopf nach einem der Ansprüche 20 bis 24, **dadurch gekennzeichnet, dass** eine der beiden Öffnungen (24) bei voll geöffneter Öffnung einen Ausströmwiderstand hat, so dass der Druck in dem Dampfkochtopf von 1 bar Überdruck auf 0,04 bar Überdruck in einer Zeit von nicht mehr als 15 s, 10 s, 8 s, 5 s abfallen kann.

26. Dampfkochtopf nach einem der Ansprüche 20 bis 25, **dadurch gekennzeichnet, dass** beide Öffnungen (23, 24) mit demselben Bedienelement (5) bedient werden können.

27. Dampfkochtopf nach einem der Ansprüche 19 bis 26, **dadurch gekennzeichnet, dass** die Öffnung (23) durch das Bedienelement (15) verschlossen werden kann, indem das Bedienelement (15) mit einem mechanisch festen Teil (42) auf ein elastisches Dichtelement (40) drückt.

28. Dampfkochtopf nach einem der Ansprüche 19 bis 27, **dadurch gekennzeichnet, dass** das Bedienelement (15) die Vorspannung eines elastischen Elements, wie etwa einer Feder (87) eines Druckventils (34) variiert.

29. Dampfkochtopf nach einem der Ansprüche 20 bis 28, **dadurch gekennzeichnet, dass** die erste und/oder die zweite Öffnung (23, 24) im abnehmbaren Deckel (3) des Dampfkochtopfs (1) vorgesehen ist.

30. Dampfkochtopf nach einem der Ansprüche 1 bis 29, **dadurch gekennzeichnet, dass** eine Druckerfassungseinrichtung (35) vorgesehen ist, die
- einen mechanischen Teil (45-67) mit mindestens einem durch den Druck beweglichen Teil (56, 65) und
- einen elektronischen Teil (66), der die Position des beweglichen Teils (56, 65) erfassen kann, um den Druck zu bestimmen, umfasst.

31. Dampfkochtopf nach Anspruch 30, **dadurch gekennzeichnet, dass** der mechanische Teil der Druckerfassungseinrichtung (35) mit der Drehwelle (15) so verstellt werden kann, dass die Beziehung zwischen dem Druck und der Position des beweglichen Teils (56, 65) verändert wird.

32. Dampfkochtopf nach Anspruch 31, **dadurch gekennzeichnet, dass** die Position des beweglichen Teils (56, 65), die einem eingestellten Solldruck entspricht, für verschiedene gewählte Solldrücke in etwa gleich ist.

33. Dampfkochtopf nach einem der Ansprüche 30 bis 32, **dadurch gekennzeichnet, dass** der mechanische Teil (56, 65) und der elektronische Teil (66) berührungslos miteinander zusammenwirken.

34. Dampfkochtopf nach einem der Ansprüche 30 bis 33, **dadurch gekennzeichnet, dass** der elektronische Teil (6, 66) von dem mechanischen Teil abnehmbar ist und zwar vorzugsweise werkzeuglos.

35. Dampfkochtopf nach einem der Ansprüche 30 bis 34, **dadurch gekennzeichnet, dass** der mechanische Teil von außen in eine Ruhestellung gebracht werden kann, wobei hierzu beispielsweise ein Loch (51) im Gehäuse vorgesehen ist, durch das ein Stift geschoben werden kann, um das verlagerbare Messelement (56, 65) in die Ruhestellung zu bringen.

36. Dampfkochtopf nach einem der Ansprüche 30 bis 35, **dadurch gekennzeichnet, dass** ein Zeitmesser (113) mit der Druckerfassungseinrichtung (35, 56, 65, 66) gekoppelt ist.

37. Dampfkochtopf nach einem der Ansprüche 1 bis 36, **gekennzeichnet durch** einen Deckel (3) und einen Griffteil (8) an dem Deckel (3), wobei in dem Griffteil (8) die Drehwelle (15) linearverschiebbar vorgesehen ist, und **durch** ein verlagerbar gelagertes U-förmiges Verriegelungselement (140) verriegelt werden kann, so dass eine Linearverschiebbarkeit eingeschränkt ist.

## Claims

1. Pressure cooker (1) with a handle (4) with an operating element comprising a rotating shaft (15),
**characterised in that**
the rotating shaft (15) extends from a region above the cooking space (11) in particular horizontal sideways and can be brought into at least two, three, four or more predefined rotary positions, such as for example latching positions, which preferably provide different settings of the pressure cooker (1).

2. Pressure cooker according to Claim 1 **characterised in that** the rotating shaft (15) is accommodated in the handle (4), in particular in the sideways protruding part.

3. Pressure cooker according to claim 1 or 2 **characterised in that** the rotating shaft (15) is provided with an actuating element (5), wherein the actuating element (5) is preferably at the end of the handle.

4. Pressure cooker according to claim 3 **characterised in that** the actuating element (5) is arranged completely to the side of the cooking space (11).

5. Pressure cooker according to one of the claims 1 to 4 **characterised in that** on the rotating shaft (15) at least one, two or three cams (42, 53, 74) are provided with which mechanical elements of the pressure cooker (1) can be adjusted.

6. Pressure cooker according to claim 5 **characterised in that** for each cam at least one, two or three rocker elements (54, 59, 70) are provided which interact with the respective cams (53, 74).

7. Pressure cooker according to one of the claims 1 to 6 **characterised in that** the maximum specified pressure of the pressure cooker (1) can be set by rotation of the rotating shaft (15).

8. Pressure cooker according to one of the claims 1 to 7 **characterised in that** the initiation pressure for a time acquisition can be set by rotation of the rotating shaft (15).

9. Pressure cooker according to one of the claims 1 to 8 **characterised in that** an aperture (23) for pressure relief can be opened or closed by rotation of the rotating shaft (15).

10. Pressure cooker according to one of the claims 1 to 9 **characterised in that** the rotating shaft (15) for operating the pressure cooker can be linearly displaced.

11. Pressure cooker according to one of the claims 1 to 10 **characterised in that** an aperture (24) in the pressure cooker for pressure relief can be opened or closed through linear displacement of the rotating shaft (15).

12. Pressure cooker according to one of the claims 1 to 11 **characterised in that** the pretension of a pressure valve (34), which can be pretensioned by an elastic element, such as a spring (87) can be varied by the rotation and / or displacement of the rotating shaft (15).

13. Pressure cooker according to one of the claims 1 to 12 **characterised in that** the pretension of a pressure measurement device (35), which can be pretensioned by an elastic element, such as a spring (50) can be varied by the rotation of the rotating shaft (15).

14. Pressure cooker according to claim 13 **characterised in that** the pressure measurement device (35) comprises an electronic evaluation device (66), which preferably can acquire the pressure and / or the attainment of one or more pressure levels and / or the exceeding of one or more pressure levels and / or the undercutting of one or more pressure levels.

15. Pressure cooker according to one of the Claims 13 or 14 **characterised in that** the pressure measurement device (35) comprises a measuring element (65), displaceable by the pressure, wherein the electronic evaluation device (66) acquires the position of the displaceable measuring element (65) for the pressure determination.

16. Pressure cooker according to Claim 15 **characterised in that** the relationship between the pressure in the pressure cooker (1) and the position of the displaceable measuring element (65) is changed by the variation of the pretension of the pressure measurement device (35).

17. Pressure cooker according to claim 15 or 16 **characterised in that** the displaceable measuring element (65) can be brought into an idle position from outside, whereby for example a hole (51) in the housing is provided for this, through which a pin can be pushed to bring the displaceable measuring element (65) into the idle position.

18. Pressure cooker according to one of the claims 1 to 17 **characterised in that** the rotating shaft (15) is straight and / or flexible and / or provided with one or more flexible points.

19. Pressure cooker according to one of the claims 1 to 18 **characterised in that** with the rotating shaft (15) the pressure can be vented from the pressure cooker through an aperture with at least two specified different pressure relief rates or with at least one specified pressure relief rate and with a pressure relief rate, adjustable up to bigger values than the specified value.

20. Pressure cooker according to claim 19 **characterised in that** two different apertures (23, 24) are provided for pressure relief.

21. Pressure cooker according to claim 20 **characterised in that** the two apertures (23, 24) have different discharge resistances, such as due to different minimum discharge cross-sectional areas.

22. Pressure cooker according to one of the claims 19 to 21 **characterised in that** at least one of the apertures (23, 24) or both have a discharge resistance which is influenced by the pressure in the pressure cooker (1), such as for example with a pressure reduction valve or a valve which changes its cross-sectional area according to the pressure.

23. Pressure cooker according to one of the claims 21 to 22 **characterised in that** the aperture (23) has a minimum discharge cross-sectional area of no more than 0.1, 0.2, 0.5, 1.0, 1.5, 2.0, 2.5 or 3.0 mm².

24. Pressure cooker according to one of the claims 19 to 23 **characterised in that** the aperture (23) when fully open has a discharge resistance such that the pressure in the pressure cooker can reduce from 1 bar overpressure to 0.04 bar overpressure in a time of at least 10 s, 20 s, 30 s, 40 s, 50 s, 1 min, 1 min 15 s, 1 min 30 s, 2 min.

25. Pressure cooker according to one of the claims 20 to 24 **characterised in that** one of the two apertures (24) when fully open has a discharge resistance such that the pressure in the pressure cooker can reduce from 1 bar overpressure to 0.04 bar overpressure in a time of no more than 15s, 10s, 8s, 5s.

26. Pressure cooker according to one of the claims 20 to 25 **characterised in that** both apertures (23, 24) can be operated with the same operating element (15).

27. Pressure cooker according to one of the claims 19 to 26 **characterised in that** the aperture (23) can be closed by the operating element (15) **in that** the operating element (15) presses with a mechanically strong part (42) onto an elastic sealing element (40).

28. Pressure cooker according to one of the claims 19 to 27 **characterised in that** the operating element (15) varies the pretension of an elastic element, such as a spring (87) of a pressure valve (34).

29. Pressure cooker according to one of the claims 20 to 28 **characterised in that** the first and / or the second aperture (23, 24) is provided in the removable lid (3) of the pressure cooker (1).

30. Pressure cooker according to one of the claims 1 to 29 **characterised in that** a pressure acquisition device (35) is provided which comprises
- a mechanical part (45 - 67) with at least one part (56, 65) which is movable by the pressure and
- an electronic part (66), which can acquire the position of the movable part (56, 65) to determine the pressure.

31. Pressure cooker according to claim 30 **characterised in that** the mechanical part of the pressure acquisition device (35) can be adjusted with the rotating shaft (15) such that the relationship between the pressure and the position of the movable part (56, 65) is changed.

32. Pressure cooker according to claim 31 **characterised in that** the position of the movable part (56, 65), which corresponds to a set specified pressure is approximately the same for different selected specified pressures.

33. Pressure cooker according to one of the claims 30 to 32 **characterised in that** the mechanical part (56, 65) and the electronic part (66) interact with one another without making contact.

34. Pressure cooker according to one of the claims 30 to 33 **characterised in that** the electronic part (6, 66) can be removed from the mechanical part and in fact preferably without using tools.

35. Pressure cooker according to one of the claims 30 to 34 **characterised in that** the mechanical part can be brought into an idle position from outside, whereby for example a hole (51) in the housing is provided for this, through which a pin can be pushed to bring the displaceable measuring element (56, 65) into the idle position.

36. Pressure cooker according to one of the claims 30 to 35 **characterised in that** the pressure acquisition device (35, 56, 65, 66) is coupled to a time measurement device (113).

37. Pressure cooker according to one of the claims 1 to 36 **characterised by** a lid (3) and a handle part (8) on the lid (3), wherein in the handle part (8) the rotating shaft (15) is provided being linearly displaceable and lockable by a displaceably supported U-shaped locking element (140), such that linear displacement is restricted.

## Revendications

1. Autocuiseur (1) ou cuiseur vapeur comprenant une poignée (4) avec un élément de commande incluant un arbre rotatif (15),
**caractérisé en ce que**
l'arbre rotatif (15) s'étend, à partir d'une zone située au-dessus de la chambre de cuisson (11), sensiblement de manière horizontale vers le côté, et peut être amené dans au moins deux, trois, quatre positions de rotation prédéfinies, ou davantage, comme par exemple des positions d'encliquetage, qui produisent différents réglages de l'autocuiseur (1).

2. Autocuiseur selon la revendication 1,
**caractérisé en ce que** l'arbre rotatif (15) est logé dans la poignée (4), notamment dans la partie en saillie latérale.

3. Autocuiseur selon la revendication 1 ou la revendication 2, **caractérisé en ce que** l'arbre rotatif (15) est muni d'un élément d'actionnement (5), l'élément d'actionnement (5) étant de préférence prévu à l'extrémité de la poignée.

4. Autocuiseur selon la revendication 3,
**caractérisé en ce que** l'élément d'actionnement (5) est agencé en totalité latéralement à côté de la chambre de cuisson (11).

5. Autocuiseur selon l'une des revendications 1 à 4, **caractérisé en ce que** sur l'arbre rotatif (15) sont prévues au moins une, deux ou trois cames (42, 53, 74), à l'aide desquelles peuvent être réglés ou déplacés des éléments mécaniques de l'autocuiseur (1).

6. Autocuiseur selon la revendication 5,
**caractérisé en ce que** pour chaque came sont prévus au moins un, deux ou trois éléments basculeurs (54, 59, 70), qui interagissent avec la came respective (53, 74).

7. Autocuiseur selon l'une des revendications 1 à 6, **caractérisé en ce que** par rotation de l'arbre rotatif (15), on règle la pression de consigne maximale de l'autocuiseur (1).

8. Autocuiseur selon l'une des revendications 1 à 7, **caractérisé en ce que** par rotation de l'arbre rotatif (15), on règle la pression de déclenchement pour un relevé ou une saisie de temps.

9. Autocuiseur selon l'une des revendications 1 à 8, **caractérisé en ce que** par rotation de l'arbre rotatif (15), il est possible d'ouvrir ou de fermer une ouverture (23) pour l'échappement de pression.

10. Autocuiseur selon l'une des revendications 1 à 9, **caractérisé en ce que** l'arbre rotatif (15) peut coulisser linéairement pour assurer la commande de service de l'autocuiseur.

11. Autocuiseur selon l'une des revendications 1 à 10, **caractérisé en ce que** par coulissement linéaire de l'arbre rotatif (15), il est possible d'ouvrir ou de fermer une ouverture (24) de l'autocuiseur pour l'échappement de pression.

12. Autocuiseur selon l'une des revendications 1 à 11, **caractérisé en ce que** par rotation et/ou coulissement de l'arbre rotatif (15), il est possible de faire varier la précontrainte d'une soupape de pression (34) pouvant être précontrainte avec un élément élastique, comme par exemple un ressort (87).

13. Autocuiseur selon l'une des revendications 1 à 12, **caractérisé en ce que** par rotation de l'arbre rotatif (15), il est possible de faire varier la précontrainte d'un manomètre (35) pouvant être précontraint avec un élément élastique, comme par exemple un ressort (50).

14. Autocuiseur selon la revendication 13,
**caractérisé en ce que** le manomètre (35) comprend un dispositif électronique de traitement de données (66), qui est en mesure de relever de préférence la pression, et/ou le fait d'atteindre un ou plusieurs niveaux de pression, et/ou le dépassement d'un ou de plusieurs niveaux de pression, et/ou le fait de passer en-dessous d'un ou de plusieurs niveaux de pression.

15. Autocuiseur selon l'une des revendications 13 ou 14, **caractérisé en ce que** le manomètre (35) comprend un élément de mesure (65) pouvant être déplacé par la pression, le dispositif électronique de traitement de données (66) relevant la position de l'élément de mesure déplaçable (65), pour déterminer la pression.

16. Autocuiseur selon la revendication 15,
**caractérisé en ce que** par la variation de la précontrainte du manomètre (35), on modifie la relation entre la pression dans l'autocuiseur (1) et la position de l'élément de mesure déplaçable (65).

17. Autocuiseur selon la revendication 15 ou la revendication 16, **caractérisé en ce que** l'élément de mesure déplaçable (65) peut être amené, de l'extérieur, dans une position de repos, et à cet effet il est par exemple prévu, dans le carter, un trou (51) à travers lequel il est possible de faire coulisser une broche pour pouvoir amener l'élément de mesure déplaçable (65) dans la position de repos.

18. Autocuiseur selon l'une des revendications 1 à 17, **caractérisé en ce que** l'arbre rotatif (15) est rectiligne, et/ou souple, et/ou est pourvu d'une ou de plusieurs zones flexibles.

19. Autocuiseur selon l'une des revendications 1 à 18, **caractérisé en ce qu'**à l'aide de l'arbre rotatif (15), il est possible d'assurer l'échappement de la pression hors de l'autocuiseur, par une ouverture avec au moins deux vitesses d'échappement de pression prescrites différentes ou au moins avec une vitesse d'échappement de pression prescrite et une vitesse d'échappement de pression réglable jusqu'à des valeurs supérieures à la valeur prescrite.

20. Autocuiseur selon la revendication 19,
**caractérisé en ce que** deux ouvertures (23, 24) différentes sont prévues pour l'échappement de la pression.

21. Autocuiseur selon la revendication 20,
**caractérisé en ce que** les deux ouvertures (23, 24) ont des résistances à l'écoulement de sortie différentes, comme par exemple des sections transversales d'écoulement de sortie minimales, différentes.

22. Autocuiseur selon l'une des revendications 19 à 21, **caractérisé en ce que** l'une au moins des ouvertures (23, 24) ou les deux ont une résistance à l'écoulement de sortie, qui est influencée par la pression dans l'autocuiseur (1), comme par exemple dans le cas d'une soupape de réduction de pression ou d'une soupape dont la section transversale varie en fonction de la pression.

23. Autocuiseur selon l'une des revendications 21 à 22, **caractérisé en ce que** l'ouverture (23) possède une section d'écoulement de sortie minimale de pas plus de 0,1, 0,2, 0,5, 1,0, 1,5, 2,0, 2,5 ou 3,0 mm².

24. Autocuiseur selon l'une des revendications 19 à 23, **caractérisé en ce que** l'ouverture (23) possède, lorsque l'ouverture est totalement ouverte, une résistance à l'écoulement de sortie telle, que la pression dans l'autocuiseur puisse chuter de 1 bar de surpression à 0,04 bar de surpression en un temps d'au moins 10s, 20s, 30s, 40s, 50s, 1 min, 1 min 15s, 1 min 30s, 2 min.

25. Autocuiseur selon l'une des revendications 20 à 24, **caractérisé en ce que** l'une des deux ouvertures (24) possède, lorsque l'ouverture est totalement ouverte, une résistance à l'écoulement de sortie telle, que la pression dans l'autocuiseur puisse chuter de 1 bar de surpression à 0,04 bar de surpression en un temps de pas plus de 15s, 10s, 8s, 5s.

26. Autocuiseur selon l'une des revendications 20 à 25, **caractérisé en ce que** les deux ouvertures (23, 24) peuvent être commandées à l'aide du même élément de commande (5).

27. Autocuiseur selon l'une des revendications 19 à 26, **caractérisé en ce que** l'ouverture (23) peut être fermée par l'élément de commande (15) grâce au fait que l'élément de commande (15) appuie avec une partie mécanique fixe (42) sur un élément d'étanchéité (40) élastique.

28. Autocuiseur selon l'une des revendications 19 à 27, **caractérisé en ce que** l'élément de commande (15) fait varier la précontrainte d'un élément élastique, comme par exemple d'un ressort (87) d'une soupape de pression (34).

29. Autocuiseur selon l'une des revendications 20 à 28, **caractérisé en ce que** la première et/ou la deuxième ouverture (23, 24) sont prévues dans le couvercle amovible (3) de l'autocuiseur (1).

30. Autocuiseur selon l'une des revendications 1 à 29, **caractérisé en ce qu'**il est prévu un dispositif de relevé de pression (35), qui comprend
- une partie mécanique (45-67) avec au moins une pièce (56, 65) déplaçable par la pression, et
- une partie électronique (66), qui est en mesure de relever la position de la pièce mobile (56, 65), en vue de déterminer la pression.

31. Autocuiseur selon la revendication 30,
**caractérisé en ce que** la partie mécanique du dispositif de relevé de pression (35) peut être réglée à l'aide de l'arbre rotatif (15) de façon telle, que la relation entre la pression et la position de la pièce mobile (56, 65) soit modifiée.

32. Autocuiseur selon la revendication 31,
**caractérisé en ce que** la position de la pièce mobile (56, 65), qui correspond à une pression de consigne réglée, est environ identique pour différentes pression de consigne choisies.

33. Autocuiseur selon l'une des revendications 30 à 32, **caractérisé en ce que** la partie mécanique (56, 65) et la partie électronique (66) interagissent mutuellement, sans contact.

34. Autocuiseur selon l'une des revendications 30 à 33, **caractérisé en ce que** la partie électronique (6, 66) peut être retirée de la partie mécanique, et ceci de préférence sans outil.

35. Autocuiseur selon l'une des revendications 30 à 34, **caractérisé en ce que** la partie mécanique peut être amenée, à partir de l'extérieur, dans une position de repos, et à cet effet il est par exemple prévu, dans le carter, un trou (51) à travers lequel il est possible de faire coulisser une broche pour pouvoir amener l'élément de mesure déplaçable (56, 65) dans la position de repos.

36. Autocuiseur selon l'une des revendications 30 à 35, **caractérisé en ce qu'**un dispositif de mesure de temps ou minuterie (113) est couplé avec le dispositif de relevé de pression (35, 56, 65, 66).

37. Autocuiseur selon l'une des revendications 1 à 36, **caractérisé par** un couvercle (3) et une pièce de poignée (8) sur le couvercle (3), et dans la pièce de poignée (8) est prévu l'arbre rotatif (15) pouvant coulisser linéairement, et pouvant être verrouillé par un élément de verrouillage déplaçable (140), en forme de U, de manière à pouvoir limiter une possibilité de coulissement linéaire.
